# EUROPEAN PATENT APPLICATION

(11) **EP 4 737 157 A1**
(43) Date of publication of application: **06.05.2026**
(21) Application number: 24829929.9
(22) Date of filing: 05.03.2024
(51) Int. Cl.: B60K 1/04

(54) **BATTERY MOUNTING FRAME, VEHICLE FRAME ASSEMBLY AND VEHICLE**

(30) Priority: 30.06.2023 CN 202310799065
(71) Applicant: Contemporary Amperex Technology Co., Limited, Ningde, Fujian 352100 (CN)
(72) Inventor: WU, Kai, Ningde, Fujian 352100 (CN); CAO, Gen, Ningde, Fujian 352100 (CN); CHAN, Libing, Ningde, Fujian 352100 (CN); ZHANG, Shuai, Ningde, Fujian 352100 (CN); LIN, Baiqing, Ningde, Fujian 352100 (CN); WANG, Chunhui, Ningde, Fujian 352100 (CN)
(74) Representative: Ran, Handong
(86) International application number: PCT/CN2024/080072
(87) International publication number: WO 2025/001276

(57) **Abstract**

Disclosed in the present application are a battery mounting frame, a vehicle frame assembly and a vehicle. The battery mounting frame is used for mounting of a battery to vehicle frame members; the battery mounting frame comprises: a main body part and an extension part; the main body part is used for connecting to the vehicle frame members and extending in the length direction of a vehicle; the extension part has an included angle with respect to the extension direction of the main body part and extends in the direction away from the main body part; a mounting structure is provided on the extension part, and the mounting structure is used for mounting of the battery.

## Description

### CROSS-REFERENCE TO RELATED APPLICATIONS

This application is based on and claims the priority to Chinese Patent Application No. 202310799065.6, filed on June 30, 2023, which is incorporated herein by reference in its entirety.

### TECHNICAL FIELD

This application relates to the field of batteries, and specifically, to a battery installation frame, a frame assembly, and a vehicle.

### BACKGROUND

Energy conservation and emission reduction are key to the sustainable development of the automotive industry. Electric vehicles, due to their energy-saving and environmentally friendly advantages, have become an important part of the sustainable development of the automotive industry. For electric vehicles, battery technology stands as a pivotal factor influencing their advancement. During the installation of batteries in vehicles, the space available for arranging the battery on the vehicle is limited, which leads to limited battery capacity and thus affects the driving range of the vehicle per battery swap.

### SUMMARY

In view of the above issues, this application provides a battery installation frame, a frame assembly, and a vehicle, which can expand the battery mounting space, so as to increase the driving range of the vehicle per battery swap.

According to a first aspect, this application provides a battery installation frame for installing a battery to a vehicle beam, where the battery installation frame includes a main body portion and an extension portion, where the main body portion is configured to be connected to the vehicle beam and extends along a length direction of the vehicle beam, the extension portion is at an angle to an extension direction of the main body portion and extends in a direction away from the main body portion, the extension portion is provided with a mounting structure, and the mounting structure is configured to mount the battery.

In the technical solution of the embodiments of this application, since the length direction of the extension portion is at an angle to the extension direction of the main body portion and extends in the direction away from the main body portion, and the extension portion is provided with the mounting structure for mounting the battery, such a design can expand the battery mounting space in a width direction of the vehicle. This facilitates an increase in a dimension of the battery in the width direction of the vehicle, and also facilitates flexible arrangement of a distribution position, a quantity, and a structural form of the mounting structures on the extension portion, thereby improving the mounting strength of a large dimensional battery and increasing the driving range of the vehicle per battery swap.

In some embodiments, the extension portion is provided in plurality on at least one side of the main body portion in a width direction of the main body portion, the plurality of extension portions are spaced apart along the extension direction of the main body portion, and a battery mounting space is defined between two adjacent extension portions.

In the above technical solution, this arrangement facilitates full utilization of space in a length direction of the vehicle to arrange more extension portions, thereby defining a greater quantity of battery mounting spaces. This allows for mounting of a greater quantity of batteries, and this enables an increase in the dimension of the battery while also increasing the quantity of mounted batteries, further increasing the driving range of the vehicle per battery swap. Additionally, two extension portions adjacent in the extension direction of the main body portion can serve as outer walls of the battery mounting space to provide a certain degree of protection to the battery, reducing damage to the battery, and improving the reliability of the battery in supplying electrical energy to the vehicle.

In some embodiments, the mounting structure is arranged on a side of the extension portion facing the battery mounting space.

In the above technical solution, the mounting structure is arranged on the side of the extension portion facing the battery mounting space, which helps to reduce the difficulty of arranging the mounting structure, allows ample space for flexibly configuring a structural form of the mounting structure, and enables the mounting structure to more easily and reliably mount the battery.

In some embodiments, at least one extension portion located in the middle among the plurality of extension portions is a shared extension portion, the shared extension portion has the battery mounting space on each of two sides in the extension direction of the main body portion, and the mounting structures are respectively arranged on the two sides of each of the battery mounting spaces located on two sides of the shared extension portion.

In the above technical solution, when the quantity of battery mounting spaces spaced apart along the extension direction of the main body portion is fixed, the quantity of extension portions spaced apart along the extension direction of the main body portion can be reduced, facilitating cost reduction and reducing the load of the vehicle.

In some embodiments, the mounting structures on the two sides of the shared extension portion in the extension direction of the main body portion are offset in their orthographic projections on a projection plane perpendicular to the extension direction of the main body portion.

In the above technical solution, the mounting structures on two sides of the shared extension portion are configured to are offset in their orthographic projections on the projection plane perpendicular to the extension direction of the main body portion, which facilitates more reasonable stress distribution on the shared extension portion. When batteries in the battery mounting spaces on the two sides of the shared extension portion are respectively connected to the mounting structures on the two sides of the shared extension portion, problems such as deformation or fracture of the shared extension portion caused by stress concentration can be alleviated, the service life of the shared extension portion can be prolonged, and the mounting reliability of the battery can be improved.

In some embodiments, the battery mounting space is provided with the mounting structures on the extension portions located on both sides in the extension direction of the main body portion.

In the above technical solution, the extension portions on the two sides of the battery mounting space in the extension direction of the main body portion can both support the battery within the battery mounting space, and the mounting structures on the two sides can disperse stress to alleviate problems such as deformation or fracture of the extension portion caused by stress concentration, prolong the service life of the shared extension portion, and improve the mounting reliability of battery.

In some embodiments, the mounting structures on the two sides of the battery mounting space in the extension direction of the main body portion are offset in their orthographic projections on a projection plane perpendicular to the extension direction of the main body portion.

In the above technical solution, the mounting structures on the two sides of the battery mounting space are configured to are offset in their orthographic projections on the projection plane perpendicular to the extension direction of the main body portion, which further facilitates stress dispersion of the mounting structures on the two sides, and further alleviates problems such as deformation or fracture of the extension portions caused by stress concentration. Additionally, when the mounting structures on the two sides of the shared extension portion in the extension direction of the main body portion are offset in their orthographic projections on the projection plane perpendicular to the extension direction of the main body portion, and the mounting structures on the two sides of the battery mounting space in the extension direction of the main body portion are offset in their orthographic projections on the projection plane perpendicular to the extension direction of the main body portion, a plurality of extension portions can be constructed with the same structure, facilitating cost reduction and simplifying production processes.

In some embodiments, a side of the extension portion facing the battery mounting space is provided with a plurality of mounting structures, at least two of which are spaced apart along the length direction of the extension portion. In the above technical solution, this arrangement facilitates full utilization of space in the length direction of the extension portion to arrange a greater quantity of mounting structures, and thus helps to enhance the mounting stability of the battery or helps to increase the quantity of batteries mounted within the battery mounting space.

In some embodiments, the extension portion includes a mounting edge protruding into the battery mounting space, and the mounting structure is located on the mounting edge. In the above technical solution, providing the mounting edge helps to reduce the difficulty of arranging the mounting structure, and easily achieves the mounting structure being located on the side of the extension portion facing the battery mounting space. Additionally, the mounting edge can provide direct or indirect support to the battery to some extent, so as to enhance the mounting stability of the battery.

In some embodiments, the mounting edge is located at a lower edge of the extension portion in a height direction of the extension portion. In the above technical solution, positioning the mounting structure at a lower height helps to reduce the maintenance difficulty of the mounting structure, also facilitates the mounting connection between the mounting structure and the battery, and improves the compactness of coordination between the battery and the extension portion. This reduces space waste, allowing the saved space to be used to further increase the dimension of the battery, thereby further improving the volumetric energy density of the battery.

In some embodiments, a length direction of the mounting edge is the same as an extension direction of the extension portion, the mounting edge is provided with a plurality of mounting structures spaced apart along the length direction of the mounting edge.

In the above technical solution, since the length direction of the mounting edge is the same as the length direction of the extension portion, this helps to reduce the processing difficulty of the mounting edge, allows the mounting edge to have a larger length dimension to accommodate a greater quantity of mounting structures. Arrangement of the plurality of mounting structures spaced apart along the length direction of the mounting edge helps to enhance the mounting stability of the battery or helps to increase the quantity of batteries mounted on the mounting edge.

In some embodiments, a length direction of the mounting edge is the same as an extension direction of the extension portion, and the mounting structure on the mounting edge is configured as one and extends along the length direction of the mounting edge.

In the above technical solution, providing only one mounting structure on the mounting edge helps to reduce the processing difficulty of the mounting structure. Moreover, the mounting structure extends along the length direction of the mounting edge, in other words, a length direction of the mounting structure is consistent with the length direction of the mounting edge. As a result, the mounting structure has a larger length dimension, a larger force-bearing area, or more connection positions, which facilitates simultaneous connection with a plurality of connection structures on the battery, improving the mounting reliability of the battery, or facilitates simultaneous mounting of a plurality of batteries.

In some embodiments, the extension portion is arranged on one side of the main body portion in a width direction of the main body portion.

In the above technical solution, arranging the extension portion on only one side of the main body portion in the width direction of the main body portion can reduce the force transmitted from the extension portion with the mounted battery to the main body portion, and thus improve the connection reliability between the extension portion and the main body portion, as well as the connection reliability between the main body portion and the vehicle beam, thereby improving the mounting reliability of the battery.

In some embodiments, the extension portion is arranged on each of two sides of the main body portion in a width direction of the main body portion.

In the above technical solution, the extension portions are arranged on the two sides of the main body portion in the width direction of the main body portion, the extension portions can be provided on the two sides of the vehicle beam just by connecting one main body portion to the vehicle beam. This allows the extension portions on the two sides to be used for mounting batteries respectively. For example, two parts of the same battery located on the two sides of the vehicle beam in the width direction of the vehicle beam can be mounted, or two separate batteries located on two sides of the vehicle beam in the width direction of the vehicle beam can be mounted, thereby increasing the mounting strength of the battery or the quantity of mounted batteries.

In some embodiments, the extension portion includes a first extension portion and a second extension portion respectively arranged on the two sides of the main body portion in the width direction of the main body portion, the first extension portion and the second extension portion have the same extension direction, and projections of the first extension portion and the second extension portion along the extension direction of the first extension portion overlap.

In the above technical solution, configuring the first extension portion and the first extension portion to have the same extension direction and their projections along the extension direction of the first extension portion to overlap enables the first extension portion and the first extension portion to simultaneously mount two parts of the same battery located on the two sides of the vehicle beam in the width direction of the vehicle beam. This allows the battery to be made larger in dimension, thereby reducing the quantity of batteries and simplifying the battery swapping complexity.

In some embodiments, the battery installation frame further includes a reinforcing portion, the reinforcing portion being configured to connect at least two extension portions located on the same side of the main body portion in a width direction of the main body portion.

In the above technical solution, this arrangement helps to enhance the overall structural strength of the battery installation frame, alleviate deformation of the extension portions caused by stress, and improve the mounting reliability of battery.

In some embodiments, a height of the extension portion tends to decrease in a direction away from the main body portion.

In the above technical solution, the height of the extension portion is configured to tend to decrease in a direction away from the main body portion, the height of the region of the extension portion away from the main body portion is made smaller. In other words, the height of the end of the extension portion connected to the main body portion is relatively large, while the height of the end away from the main body portion is relatively small. This can enhance the connection strength between the extension portion and the main body portion, improve the mounting reliability of battery by the extension portion, and reduce the weight of the extension portion, thereby reducing the load of the vehicle.

In some embodiments, the mounting structure is located at a lower edge of the extension portion, the lower edge of the extension portion extends along a horizontal line, and an upper edge of the extension portion tends to decrease in a direction away from the main body portion. In the above technical solution, this arrangement helps all mounting structures to be located at the same horizontal height, thereby facilitating battery mounting operations.

In some embodiments, the extension portion is provided with reinforcing ribs.

In the above technical solution, providing the reinforcing ribs helps to enhance the structural strength of the extension portion, and alleviates the problem of deformation caused by stress on the extension portion.

In some embodiments, at least some of the reinforcing ribs are arranged close to a middle of the extension portion in a length direction of the extension portion; or at least some of the reinforcing ribs are arranged corresponding to the mounting structures in a height direction of the extension portion; or when the extension portion is provided with a plurality of mounting structures, at least some of the reinforcing ribs are arranged corresponding to a position between two adjacent mounting structures along the height direction of the extension portion.

In the above technical solution, configuring the positions of at least some of the reinforcing ribs as described above can effectively enhance the structural strength of the extension portion with a reduced quantity of reinforcing ribs, improving the mounting reliability of battery.

In some embodiments, the extension portion is provided with a first weight-reducing structure.

In the above technical solution, providing the first weight-reducing structure helps to reduce the weight of the extension portion, and facilitates a lightweight design of the battery installation frame.

In some embodiments, the main body portion includes a beam avoidance groove, the beam avoidance groove having an opening running through along the extension direction of the main body portion.

In the above technical solution, providing the beam avoidance groove with an opening running through along the extension direction of the main body portion helps to accommodate at least a portion of the vehicle beam within the beam avoidance groove. Moreover, the opening can avoid the vehicle beam, helping to prevent interference between the battery installation frame and the vehicle beam. This reduces the difficulty of assembling and disassembling the battery installation frame, improves the compactness of coordination between the main body portion and the vehicle beam, and fully utilizes the space close to the vehicle beam to arrange the battery, thereby facilitating an increase in the dimension of the battery.

In some embodiments, the main body portion includes a first main wall and two second main walls, where the first main wall is arranged along a width direction of the main body portion, and the two second main walls are both arranged along the extension direction of the main body portion and are respectively connected to two ends of the first main wall in the width direction of the main body portion, to form the beam avoidance groove with an open top.

In the above technical solution, the beam avoidance groove can be defined by the first main wall and the two second main walls, which helps to reduce the difficulty in forming the beam avoidance groove. Moreover, the two second main walls are respectively connected to two ends of the first main wall in the width direction of the first main wall, which facilitates the formation of the opening running through along the length direction of the main body portion. Additionally, since the beam avoidance groove has an open top, the main body portion can be pushed upward from bottom to top, allowing the vehicle beam to enter the beam avoidance groove, and thus helping to reduce the difficulty of assembling the battery installation frame to the vehicle beam. This allows the battery installation frame to be installed subsequently on a vehicle beam that has already been assembled, making the battery installation frame applicable to various vehicle models.

In some embodiments, the extension portion is connected to the second main wall.

In the above technical solution, this arrangement can reduce the difficulty of connecting the extension portion to the main body portion. Additionally, both of the second main walls on two sides can be used to connect the extension portions, allowing the extension portions to be located on two sides of the vehicle beam in the width direction of the vehicle beam. In this way, the battery can be arranged in the width direction of the vehicle beam, thereby increasing the dimension of the battery or increasing the quantity of batteries.

In some embodiments, the first main wall and/or the second main wall is provided with a second weight-reducing structure.

Thus, the first weight-reducing structure can be provided on the first main wall and/or the second weight-reducing structure can be provided on the second main wall, which helps to reduce the weight of the first main wall or the second main wall, and facilitates a lightweight design of the battery installation frame.

In some embodiments, the first main wall is provided with at least one mounting structure.

Thus, providing the mounting structure on the first main wall can fully utilize the installation space at the first main wall 1, improving space utilization and helping to increase the quantity of mounting points for the mounted battery or the quantity of batteries 30 that can be mounted.

In some embodiments, the first main wall and the two second main walls are integrally formed. In this way, the first main wall and the two second main walls can be constructed as an integrally formed structure, which helps to reduce production processes, lower production costs, and improve structural reliability.

In some embodiments, the main body portion and the extension portion are integrally formed. In this way, the main body portion and the extension portion can be constructed as an integrally formed structure, which helps to reduce production processes, lower production costs, and improve structural reliability.

According to a second aspect, this application provides a frame assembly, including a vehicle beam and the battery installation frame according to any one of the above embodiments, where the battery installation frame is configured to install a battery to the vehicle beam.

In the above technical solution, when the battery is installed to the vehicle beam using the battery installation frame, the battery mounting space can be expanded, facilitating the mounting of a larger-sized battery on the battery installation frame, thereby increasing the driving range of the vehicle per battery swap.

According to a third aspect, this application provides a frame assembly, including: a vehicle beam; and an extension portion, where at least a part of the extension portion is located on one side of the vehicle beam in a width direction of the vehicle beam, the part of the extension portion located on one side of the vehicle beam in the width direction of the vehicle beam is at an angle to a length direction of the vehicle beam, the extension portion extends in a direction away from the vehicle beam, a mounting structure is disposed on the part of the extension portion located on one side of the vehicle beam in the width direction of the vehicle beam, and the mounting structure is configured to mount a battery.

In the technical solution of the embodiments of this application, since the length direction of the extension portion is at an angle to the length direction of the vehicle beam and extends in the direction away from the vehicle beam, and the extension portion is provided with the mounting structure for mounting the battery, such a design can expand the battery mounting space in a width direction of the vehicle. This facilitates an increase in a dimension of the battery in the width direction of the vehicle, and also facilitates flexible arrangement of a distribution position, a quantity, and a structural form of the mounting structures on the extension portion, thereby improving the mounting strength of a large dimensional battery and increasing the driving range of the vehicle per battery swap.

In some embodiments, the extension portion is provided in plurality on at least one side of the vehicle beam in a width direction of the vehicle beam, the plurality of extension portions are spaced apart along the length direction of the vehicle beam, and a battery mounting space is defined between two adjacent extension portions.

In the above technical solution, this arrangement facilitates full utilization of space in a length direction of the vehicle to arrange more extension portions, thereby defining a greater quantity of battery mounting spaces. This allows for mounting of a greater quantity of batteries, and this enables an increase in the dimension of the battery while also increasing the quantity of mounted batteries, further increasing the driving range of the vehicle per battery swap. Additionally, two extension portions adjacent in the length direction of the vehicle beam can serve as outer walls of the battery mounting space to provide a certain degree of protection to the battery, reducing damage to the battery, and improving the reliability of the battery in supplying electrical energy to the vehicle.

In some embodiments, the mounting structure is arranged on a side of the extension portion facing the battery mounting space.

In the above technical solution, the mounting structure is arranged on the side of the extension portion facing the battery mounting space, which helps to reduce the difficulty of arranging the mounting structure, allows ample space for flexibly configuring a structural form of the mounting structure, and enables the mounting structure to more easily and reliably mount the battery.

In some embodiments, at least one extension portion located in the middle among the plurality of extension portions is a shared extension portion, the shared extension portion has battery mounting spaces on two sides of the vehicle beam in the length direction of the vehicle beam, and mounting structures are respectively arranged on two sides of each of the battery mounting spaces located on two sides of the shared extension portion.

In the above technical solution, when the quantity of battery mounting spaces spaced apart along the length direction of the vehicle beam is fixed, the quantity of extension portions spaced apart along the length direction of the vehicle beam can be reduced, facilitating cost reduction and reducing the load of the vehicle.

In some embodiments, the mounting structures on the two sides of the shared extension portion in the length direction of the vehicle beam are offset in their orthographic projections on a projection plane perpendicular to the length direction of the vehicle beam.

In the above technical solution, the mounting structures on the two sides of the shared extension portion are configured to are offset in their orthographic projections on the projection plane perpendicular to the length direction of the vehicle beam, which facilitates more reasonable stress distribution on the shared extension portion. When batteries in the battery mounting spaces on the two sides of the shared extension portion are respectively connected to the mounting structures on the two sides of the shared extension portion, problems such as deformation or fracture of the shared extension portion caused by stress concentration can be alleviated, the service life of the shared extension portion can be prolonged, and the mounting reliability of the battery can be improved.

In some embodiments, the battery mounting space is provided with the mounting structures on the extension portions located on both sides in the length direction of the vehicle beam.

In the above technical solution, the extension portions on the two sides of the battery mounting space in the length direction of the vehicle beam can both support the battery within the battery mounting space, and the mounting structures on the two sides can disperse stress to alleviate problems such as deformation or fracture of the extension portion caused by stress concentration, prolong the service life of the shared extension portion, and improve the mounting reliability of battery.

In some embodiments, the mounting structures on the two sides of the battery mounting space in the length direction of the vehicle beam are offset in their orthographic projections on a projection plane perpendicular to the length direction of the vehicle beam.

In the above technical solution, the mounting structures on the two sides of the battery mounting space are configured to are offset in their orthographic projections on a projection plane perpendicular to the length direction of the vehicle beam, which further facilitates stress dispersion by the mounting structures on the two sides, and further alleviates problems such as deformation or fracture of the extension portions caused by stress concentration. Additionally, when the mounting structures on the two sides of the shared extension portion in the length direction of the vehicle beam are offset in their orthographic projections on the projection plane perpendicular to the length direction of the vehicle beam, and the mounting structures on the two sides of the battery mounting space in the length direction of the vehicle beam are offset in their orthographic projections on a projection plane perpendicular to the length direction of the vehicle beam, a plurality of extension portions can be constructed with the same structure, facilitating cost reduction and simplifying production processes.

In some embodiments, a side of the extension portion facing the battery mounting space is provided with a plurality of mounting structures, at least two of which are spaced apart along the width direction of the vehicle beam.

In the above technical solution, this arrangement facilitates full utilization of space in the width direction of the vehicle beam to arrange a greater quantity of mounting structures, and thus helps to enhance the mounting stability of the battery or helps to increase the quantity of batteries mounted within the battery mounting space.

In some embodiments, the extension portion includes a mounting edge protruding into the battery mounting space, and the mounting structure is located on the mounting edge.

In the above technical solution, providing the mounting edge helps to reduce the difficulty of arranging the mounting structure, and easily achieves the mounting structure being located on the side of the extension portion facing the battery mounting space. Additionally, the mounting edge can provide direct or indirect support to the battery to some extent, so as to enhance the mounting stability of the battery.

In some embodiments, the mounting edge is located at a lower edge of the extension portion in a height direction of the vehicle beam.

In the above technical solution, positioning the mounting structure at a lower height helps to reduce the maintenance difficulty of the mounting structure, also facilitates the mounting connection between the mounting structure and the battery, and improves the compactness of coordination between the battery and the extension portion. This reduces space waste, and the saved space can be used to further increase the dimension of the battery, thereby further improving the volumetric energy density of the battery.

In some embodiments, a length direction of the mounting edge is the same as a width direction of the vehicle beam, and the mounting edge is provided with a plurality of mounting structures spaced apart along the length direction of the mounting edge.

In the above technical solution, since the length direction of the mounting edge is the same as the width direction of the vehicle beam, this helps to reduce the processing difficulty of the mounting edge, allows the mounting edge to have a larger length dimension to accommodate a greater quantity of mounting structures. Arrangement of the plurality of mounting structures spaced apart along the length direction of the mounting edge helps to enhance the mounting stability of the battery or helps to increase the quantity of batteries mounted on the mounting edge.

In some embodiments, a length direction of the mounting edge is the same as a width direction of the vehicle beam, and the mounting structure on the mounting edge is configured as one and extends along the length direction of the mounting edge.

In the above technical solution, providing only one mounting structure on the mounting edge helps to reduce the processing difficulty of the mounting structure. Moreover, the mounting structure extends along the length direction of the mounting edge, in other words, a length direction of the mounting structure is consistent with the length direction of the mounting edge. As a result, the mounting structure has a larger length dimension, a larger force-bearing area, or more connection positions, which facilitates simultaneous connection with a plurality of connection structures on the battery, improving the mounting reliability of the battery, or facilitates simultaneous mounting of a plurality of batteries.

In some embodiments, the extension portion is arranged on one side of the vehicle beam in a width direction of the vehicle beam.

In the above technical solution, arranging the extension portion on only one side of the vehicle beam in the width direction of the vehicle beam can reduce the force transmitted from the extension portion with the mounted battery to the vehicle beam, and thus improve the connection reliability between the extension portion and the vehicle beam, thereby improving the mounting reliability of the battery.

In some embodiments, the extension portion is arranged on each of two sides of the vehicle beam in a width direction of the vehicle beam.

In the above technical solution, the extension portions are arranged on the two sides of the vehicle beam in the width direction of the vehicle beam. This allows the extension portions on the two sides of the vehicle beam to be used for mounting batteries respectively. For example, two parts of the same battery located on two sides of the vehicle beam in the width direction of the vehicle beam can be mounted, or two separate batteries located on two sides of the vehicle beam in the width direction of the vehicle beam, can be mounted, thereby increasing the mounting strength of the battery or the quantity of mounted batteries.

In some embodiments, the extension portion includes a first extension portion and a second extension portion respectively arranged on the two sides of the vehicle beam in the width direction of the vehicle beam, the first extension portion and the second extension portion have the same extension direction, and projections of the first extension portion and the second extension portion along the extension direction of the first extension portion overlap.

In the above technical solution, configuring the first extension portion and the second extension portion to have the same extension direction and their projections along the extension direction of the first extension portion to overlap enables the first extension portion and the second extension portion to simultaneously mount two parts of the same battery located on the two sides of the vehicle beam in the width direction of the vehicle beam. This allows the battery to be made larger in dimension, thereby reducing the quantity of batteries and simplifying battery swapping complexity.

In some embodiments, the frame assembly further includes a reinforcing portion, the reinforcing portion being configured to connect at least two extension portions located on the same side of the vehicle beam in a width direction of the vehicle beam.

In the above technical solution, this arrangement helps to enhance the overall structural strength of the at least two extension portions located on the same side of the vehicle beam in the width direction of the vehicle beam, alleviate deformation of the extension portions caused by stress and improve the mounting reliability of battery.

In some embodiments, a height of the extension portion in a height direction of the vehicle beam tends to decrease in a direction away from the vehicle beam.

In the above technical solution, the height of the extension portion is configured to tend to decrease in a direction away from the vehicle beam, the height of the region of the extension portion away from the vehicle beam is made smaller. In other words, the height of the end of the extension portion connected to the vehicle beam is relatively large, while the height of the end away from the vehicle beam is relatively small. This can enhance the connection strength between the extension portion and the vehicle beam, improve the mounting reliability of battery by the extension portion, and reduce the weight of the extension portion, thereby reducing the load of the vehicle.

In some embodiments, the mounting structure is located at a lower edge of the extension portion, the lower edge of the extension portion extends along a horizontal line, and an upper edge of the extension portion tends to decrease in a direction away from the vehicle beam. In the above technical solution, this arrangement helps all mounting structures to be located at the same horizontal height, thereby facilitating battery mounting operations.

In some embodiments, the extension portion is provided with reinforcing ribs.

In the above technical solution, providing the reinforcing ribs helps to enhance the structural strength of the extension portion, and alleviates the problem of deformation caused by stress on the extension portion.

In some embodiments, at least some of the reinforcing ribs are arranged close to a middle of the extension portion in a width direction of the vehicle beam; or at least some of the reinforcing ribs are arranged corresponding to the mounting structures in a height direction of the vehicle beam; or when the extension portion is provided with a plurality of mounting structures, at least some of the reinforcing ribs are arranged corresponding to a position between two adjacent mounting structures along the height direction of the vehicle beam.

In the above technical solution, configuring the positions of at least some of the reinforcing ribs as described above can effectively enhance the structural strength of the extension portion with a reduced quantity of reinforcing ribs, improving the mounting reliability of battery.

In some embodiments, the extension portion is provided with a first weight-reducing structure.

In the above technical solution, providing the first weight-reducing structure helps to reduce the weight of the extension portion, and facilitates a lightweight design of the battery installation frame.

In some embodiments, the extension portion is entirely located on one side of the vehicle beam in a width direction of the vehicle beam, and the frame assembly further includes a main body portion, where the main body portion is connected to the vehicle beam, and the extension portion is connected to the main body portion.

In the above technical solution, providing the main body portion enables the extension portion to be connected to the vehicle beam via the main body portion, which helps to reduce the difficulty in arranging the extension portion. Additionally, arranging the extension portion on one side of the vehicle beam in the width direction of the vehicle beam can fully utilize the space in the width direction of the vehicle beam to mount the battery, thereby facilitating an increase in the dimension of the battery dimension. Furthermore, when the extension portion is provided in plurality, for example, the plurality of extension portions can first be arranged on the main body portion, and then the main body portion can be connected to the vehicle beam, assembly steps are simplified and assembly difficulty is lowered. When the extension portions are arranged on vehicle beams of different dimensions, only the main body portion needs to be adjusted, improving the adaptability of the extension portions.

In some embodiments, the main body portion spans the vehicle beam, such that extension portions are respectively connected to two sides of the main body portion in a width direction of the vehicle beam.

In the above technical solution, configuring the main body portion to span the vehicle beam enables the main body portion to simultaneously connect extension portions on the two sides of the vehicle beam in the width direction of the vehicle beam, which further improves the assembly efficiency between the battery installation frame and the vehicle beam, and helps to enhance the overall structural strength of the battery installation frame. Additionally, since the extension portions are provided on two sides of the vehicle beam to mount batteries, the spaces on the two sides of the vehicle beam in the width direction of the vehicle beam can be fully utilized to mount batteries, which helps to increase the dimension of the battery and the quantity of batteries, thereby increasing the driving range of the vehicle per battery swap.

According to a fourth aspect, this application provides a vehicle, including a battery and the frame assembly according to any one of the above embodiments, where the battery is installed to the frame assembly.

In the above technical solution, providing the frame assembly can increase in the dimension of the battery and the quantity of batteries, thereby helping to increase the driving range of the vehicle per battery swap.

In some embodiments, the battery includes a battery upper portion and a battery lower portion, where the battery upper portion is higher than a bottom surface of the vehicle beam, and the battery lower portion is lower than the bottom surface of the vehicle beam.

In the above technical solution, the battery upper portion can occupy the spaces on the two sides of the vehicle beam in the width direction of the vehicle beam, which improves the space utilization. This allows a dimension of the battery in a height direction of the vehicle to be increased, thereby increasing the energy density the battery.

In some embodiments, in a length direction of the vehicle beam, a dimension of the battery upper portion is smaller than a dimension of the battery lower portion to form a stepped surface between the battery upper portion and the battery lower portion, the stepped surface abutting against a bottom of the extension portion.

In the above technical solution, during actual installation of the battery, when the battery upper portion is installed from bottom to top, the abutment between the bottom of the extension portion and the stepped surface can be used to provide a prompt indicating that the battery is properly assembled. This prevents the problems of the battery being excessively squeezed upward, which could cause it to hit the vehicle underbody, thereby protecting the battery. Additionally, configuring the dimension of the battery lower portion to be larger than the dimension of the battery upper portion can further increase the dimension of the battery to some extent, thereby further increasing the volumetric energy density of the battery.

In some embodiments, the battery includes two battery side portions and a battery central portion, where in a width direction of the vehicle beam, the two battery side portions are respectively located on two sides of the battery central portion, a top surface of the battery central portion is lower than a top surface of the battery side portions, to form an avoidance groove, between the two battery side portions and the battery central portion, that extends along a length direction of the vehicle beam and has an open top.

In the above technical solution, the structure of the battery is ingeniously designed to avoid the vehicle beam, such that the spaces on the two sides of the vehicle beam in the width direction of the vehicle beam are fully utilized, which allows the overall dimension of the battery to be increased, thereby increasing the volumetric energy density of the battery.

The above description is only an overview of the technical solution of this application. To more clearly understand the technical means of this application, implementation can be carried out in accordance with the contents of the specification. Furthermore, to make the above and other purposes, features, and advantages of this application more apparent and understandable, the specific embodiments of this application are provided below.

### BRIEF DESCRIPTION OF DRAWINGS

Through reading the detailed description of the preferred embodiments below, various other advantages and benefits will become clear to those of ordinary skill in the art. The accompanying drawings are provided solely for the purpose of illustrating the preferred embodiments and are not considered to limit this application. Moreover, throughout all the accompanying drawings, identical components are denoted by identical reference signs. In the accompanying drawings:
FIG. 1 is a schematic structural diagram of a vehicle according to some embodiments of this application;
FIG. 2 is a schematic exploded view of a battery according to some embodiments of this application;
FIG. 3 is a schematic diagram of the assembly of a frame assembly and a battery according to some embodiments of this application;
FIG. 4 is a schematic diagram of a frame assembly according to some embodiments of this application;
FIG. 5 is an enlarged view of portion A in FIG. 4;
FIG. 6 is a front view of the frame assembly shown in FIG. 4;
FIG. 7 is a partial enlarged view of a battery installation frame according to another embodiment of this application;
FIG. 8 is an enlarged view of portion B in FIG. 4;
FIG. 9 is a schematic diagram of a battery according to an embodiment of this application;
FIG. 10 is an enlarged view of portion C in FIG. 4;
FIG. 11 is a schematic diagram of a battery according to another embodiment of this application;
FIG. 12 is a partial enlarged view of FIG. 4;
FIG. 13 is a schematic diagram of a frame assembly according to some embodiments of this application;
FIG. 14 is an enlarged view of portion D in FIG. 13;
FIG. 15 is a schematic diagram of a battery according to yet another embodiment of this application;
FIG. 16 is a schematic diagram of a vehicle according to some embodiments of this application;
FIG. 17 is a bottom view of the vehicle in FIG. 16;
FIG. 18 is a cross-sectional view at line E-E in FIG. 17;
FIG. 19 is a cross-sectional view at line F-F in FIG. 17;
FIG. 20 is an orthographic projection view of a battery installation frame according to some embodiments of this application; and
FIG. 21 is a cross-sectional view of a battery installation frame according to some embodiments of this application.

Reference signs: vehicle 1000; frame assembly 100; battery installation frame 10; frame body 10a; vehicle beam 20; longitudinal beam 201; cross beam 202; battery 30; battery upper portion 30a; battery lower portion 30b; installation structure 30c; stepped surface 30d; battery side portion 30e; battery central portion 30f; avoidance groove 30g; docking portion 30h; box 301; first portion 3011; second portion 3012; battery cell 302; controller 40; motor 50; main body portion 1; first main wall 11; second main wall 12; beam avoidance groove 13; second weight-reducing structure 14; avoidance opening 15; extension portion 2; shared extension portion 2a; first extension portion 21; second extension portion 22; mounting installation surface 23; first mounting installation surface 231; second mounting installation surface 232; mounting edge 24; reinforcing rib 25; first weight-reducing structure 26; mounting structure 3; battery mounting space 4; reinforcing portion 5; docking structure 6; bearing frame 61; third weight-reducing structure 613; first reinforcing structure 614; docking apparatus 62; first direction X; second direction Y; and third direction Z.

### DESCRIPTION OF EMBODIMENTS

The embodiments of the technical solutions of this application will be described in detail below with reference to the accompanying drawings. The following embodiments are merely used to more clearly illustrate the technical solutions of this application and are therefore provided only as examples, not to limit the scope of protection of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "including" and "having" and any variations thereof in the specification, claims, and drawing descriptions of this application are intended to cover non-exclusive inclusion.

In the description of the embodiments of this application, technical terms such as "first" and "second" are used only to distinguish different objects and should not be understood as indicating or implying relative importance or implicitly indicating the quantity, specific order, or hierarchical relationship of the technical features indicated. In the description of the embodiments of this application, the term "a plurality of" means two or more, unless explicitly and specifically defined otherwise.

Reference to an "embodiment" herein means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship between associated objects, indicating that three relationships may exist, for example, X and/or Y may indicate: X alone, X and Y together, or Y alone. Additionally, the character "/" herein generally indicates an "or" relationship between the associated objects.

In the description of the embodiments of this application, the term "a plurality of" refers to two or more (including two), similarly, "a plurality of groups" refers to two or more groups (including two groups), and "a plurality of pieces" refers to two or more pieces (including two pieces).

In the description of the embodiments of this application, the orientation or positional relationships indicated by technical terms such as "longitudinal," "transverse," "length," "width," "thickness," "upper," "lower," "front," "rear," "left," "right," "vertical," "horizontal," "top," "bottom," "inner," and "outer" are based on the orientation or positional relationships shown in the accompanying drawings, and are merely for convenience in describing the embodiments of this application and simplifying the description, rather than indicating or implying that the apparatus or element referred to must have a specific orientation, be constructed, and operate in a specific orientation, and therefore should not be construed as limiting the embodiments of this application.

In the description of the embodiments of this application, unless otherwise explicitly specified and limited, technical terms such as "installation," "connection," "linkage," and "fixing" should be understood in a broad sense, for example, as a fixed connection, a detachable connection, or an integral formation; a direct connection, an indirect connection through an intermediary, or an internal communication or interaction relationship between two elements. Those of ordinary skill in the art can understand the specific meanings of these terms in the embodiments of this application based on specific circumstances.

From the perspective of current market trends, the application of traction batteries is becoming increasingly widespread. Traction batteries are not only used in energy storage systems such as hydroelectric, thermal, wind, and solar power stations, but also widely applied in electric vehicles such as electric bicycles, electric motorcycles, and electric cars, as well as in military equipment and aerospace fields. With the continuous expansion of the application fields of traction batteries, their market demand is also continuously increasing.

In some vehicles of the related art, a vehicle beam is provided at the vehicle underbody, with a length direction of the vehicle beam consistent with a length direction of the vehicle, and mounting structures are respectively provided on two side walls of the vehicle beam in a width direction of the vehicle. A traction battery is disposed at the vehicle underbody and mounted on the mounting structures. However, the mounting structures arranged on the side walls of the vehicle beam occupy space in the width direction of the battery, making it difficult to increase a dimension of the battery in the width direction of the vehicle, thereby making it challenging to increase the volumetric energy density of the battery. Moreover, the limited space on the side walls of the vehicle beam restricts the distribution position, quantity, and structural form of the mounting structures, making it difficult to meet the mounting strength requirements for a large dimensional battery, which in turn hinders the increase in volumetric energy density of the battery. Consequently, this affects the driving range of the vehicle per battery swap.

To increase the volumetric energy density of the battery, this application proposes a battery installation frame. The battery installation frame includes a main body portion and an extension portion. The main body portion is configured to be connected to a vehicle beam. The extension portion is at an angle to a length direction of the vehicle beam and extends in a direction away from the vehicle beam. For example, extension portions are respectively provided on two sides of the vehicle beam in a width direction of the vehicle beam, and the extension portions extend along the width direction of the vehicle beam. A mounting structure is disposed on the extension portion, and the mounting structure is configured to mount a battery.

When using such a battery installation frame to install a battery to a vehicle beam, since an extension direction of the extension portion provided with the mounting structure is at an angle to the length direction of the vehicle beam, the extension portion and the mounting structure disposed thereon do not occupy space of the battery in the width direction of the vehicle, which helps to increase a dimension of the battery in the width direction of the vehicle and increase the volumetric energy density of the battery. Moreover, since the extension direction of the extension portion is at an angle to the length direction of the vehicle beam, disposing the mounting structure on the extension portion rather than on the vehicle beam can increase the available space for arranging the mounting structure, facilitating flexible configuration of a distribution position, a quantity, and a structural form of the mounting structure to meet the mounting strength requirements for a large dimensional battery, thereby enabling the mounting of a larger-sized battery and increasing the driving range of the vehicle per battery swap.

In short, in the context of increasing demand for battery arrangement space and the driving range of the vehicle per battery swap, the battery installation frame of this application can expand the battery mounting space and facilitate an increase in the dimension of the mounted battery, thereby increasing the driving range of the vehicle per battery swap.

The battery disclosed in the embodiments of this application can be used in electrical apparatuses that use a battery as a power source or in various energy storage systems that use a battery as an energy storage element. The electrical apparatuses may include, but are not limited to, mobile phones, tablets, laptops, electric toys, electric tools, battery-powered bikes, electric vehicles, ships, and spacecrafts. Electric toys may include fixed or mobile electric toys, such as gaming consoles, electric car toys, electric ship toys, and electric airplane toys, while spacecrafts may include airplanes, rockets, space shuttles, and spaceships, and the like.

For ease of explanation in the following embodiments, an embodiment of this application is described using a vehicle 1000 as an example.

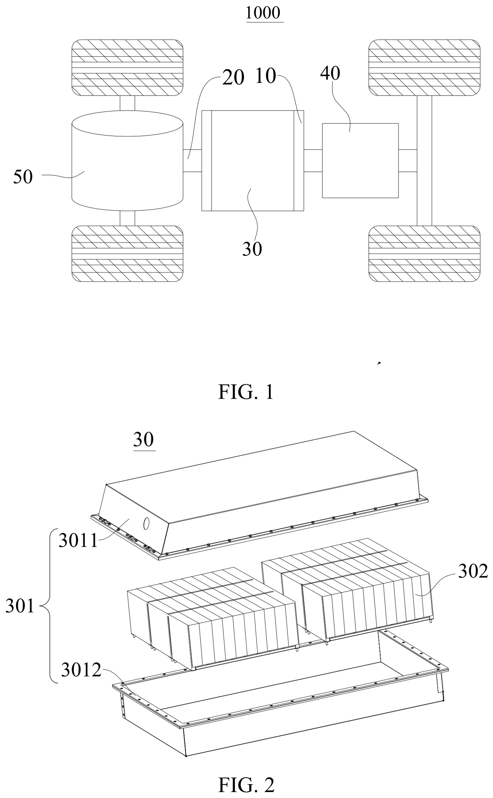

Referring to FIG. 1, FIG. 1 is a schematic structural diagram of a vehicle 1000 according to some embodiments of this application. The vehicle 1000 may be a fuel vehicle, a gas vehicle, or a new energy vehicle, where the new energy vehicle may be a battery electric vehicle, a hybrid electric vehicle, or an extended-range electric vehicle. A battery 30 is provided inside the vehicle 1000, and the battery 30 may be disposed at the bottom, front, or rear of the vehicle 1000. The battery 30 may be configured to supply power to the vehicle 1000, for example, the battery 30 may serve as an operational power source for the vehicle 1000. The vehicle 1000 may further include a controller 40 and a motor 50, where the controller 40 is configured to control the battery 30 to supply power to the motor 50, for example, for the operational power requirements during the startup, navigation, and driving of the vehicle 1000.

In some embodiments of this application, the battery 30 may not only serve as an operational power source for the vehicle 1000 but also as a driving power source for the vehicle 1000, replacing or partially replacing fuel or natural gas to provide driving power for the vehicle 1000.

Referring to FIG. 2, FIG. 2 is an exploded view of a battery 30 according to some embodiments of this application. The battery 30 includes a box 301 and a battery cell 302, with the battery cell 302 accommodated within the box 301. The box 301 is configured to provide an accommodation space for the battery cell 302, and the box 301 may adopt various structures. In some embodiments, referring to FIG. 2, the box 301 may include a first portion 3011 and a second portion 3012, where the first portion 3011 and the second portion 3012 are mutually covered, and the first portion 3011 and the second portion 3012 together define an accommodation space for accommodating the battery cell 302. The second portion 3012 may be a hollow structure with an open end, the first portion 3011 may be a plate-like structure, and the first portion 3011 covers the open end of the second portion 3012, such that the first portion 3011 and the second portion 3012 together define the accommodation space; alternatively, both the first portion 3011 and the second portion 3012 may be hollow structures with an open side, and the open side of the first portion 3011 covers the open side of the second portion 3012. Of course, the box 301 formed by the first portion 3011 and the second portion 3012 may have various shapes, such as a cylinder and a cuboid.

The battery 30 may include a battery cell 302, and the battery cell 302 may be provided in plurality. The plurality of battery cells 302 may be connected in series, parallel, or a combination thereof, where the combination refers to both series and parallel connections among the plurality of battery cells 302. The plurality of battery cells 302 may be directly connected in series, parallel, or a combination thereof, and the entirety formed by the plurality of battery cells 302 is accommodated within the box 301; alternatively, the battery 30 may also include a plurality of battery cells 302 first connected in series, parallel, or a combination to form a battery module, and a plurality of battery modules are then connected in series, parallel, or a combination to form an entirety, which is accommodated within the box 301. The battery 30 may further include other structures, for example, the battery 30 may also include a busbar for achieving electrical connections between the plurality of battery cells 302.

In this application, the battery cell 302 may include a lithium-ion secondary battery, a lithium-ion primary battery, a lithium-sulfur battery, a sodium-lithium-ion battery, a sodium-ion battery, magnesium-ion battery, or the like, which is not limited in the embodiments of this application. The battery cell 302 may be cylindrical, flat, cuboidal, or in other shapes, which is also not limited in the embodiments of this application. The battery cells 302 are generally classified into three types based on packaging methods: cylindrical battery cells, prismatic battery cells, and pouch battery cells, which is also not limited in the embodiments of this application.

The battery cell 302 includes a housing, an electrode assembly, and an electrolyte, where the housing is configured to accommodate the electrode assembly and the electrolyte. The electrode assembly consists of a positive electrode plate, a negative electrode plate, and a separator. The battery cell 302 operates primarily by the movement of metal ions between the positive electrode plate and the negative electrode plate. The material of the separator is not limited and may be, for example, polypropylene or polyethylene.

Generally, the positive electrode plate may include a positive electrode current collector and a positive electrode active material layer, where the positive electrode active material layer is directly or indirectly applied on the positive electrode current collector, and the positive electrode current collector not coated with the positive electrode active material layer protrudes from the positive electrode current collector coated with the positive electrode active material layer, serving as a positive electrode tab. For example, in a lithium-ion battery, the material of the positive electrode current collector may be aluminum, and the material of the positive electrode active material layer may be lithium cobalt oxide, lithium iron phosphate, ternary lithium, lithium manganese oxide, or the like.

Generally, the negative electrode plate may include a negative electrode current collector and a negative electrode active material layer, where the negative electrode active material layer is directly or indirectly applied on the negative electrode current collector, and the negative electrode current collector not coated with the negative electrode active material layer protrudes from the negative electrode current collector coated with the negative electrode active material layer, serving as a negative electrode tab. The material of the negative electrode current collector may be copper, and the material of the negative electrode active material layer may be carbon, silicon, or the like.

To ensure that large currents can pass without causing fusing, the positive electrode tab is provided in plurality and the plurality of positive electrode tabs are stacked together; and the negative electrode tab is provided in plurality and the plurality of negative electrode tabs are stacked together. The electrode assembly may be a wound structure or may be a laminated structure, which is not limited in the embodiments of this application.

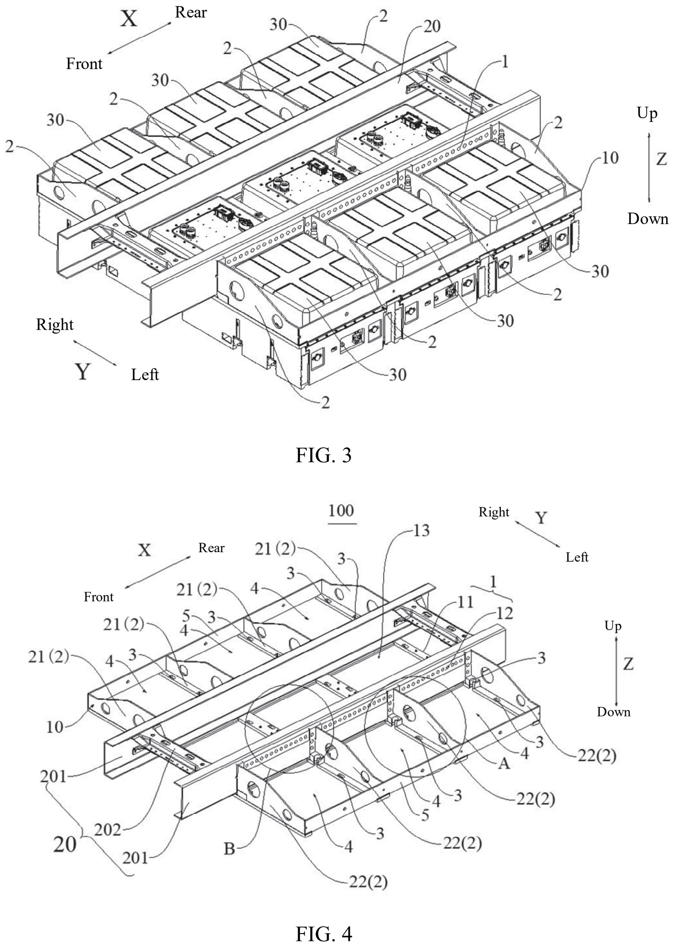

As shown in FIG. 1, an embodiment of this application provides a battery installation frame 10, where the battery installation frame 10 is configured to install a battery 30 to a vehicle beam 20. As shown in FIGs. 3 and 4, FIG. 3 illustrates a schematic diagram of the connection between the battery installation frame 10, the vehicle beam 20, and the battery 30, and FIG. 4 illustrates a schematic diagram of the connection between the battery installation frame 10 and the vehicle beam 20.

As shown in FIGs. 3 and 4, in some embodiments, the battery installation frame 10 includes a main body portion 1 and an extension portion 2. The main body portion 1 is configured to be connected to the vehicle beam 20 and extends along a length direction of the vehicle beam 20, a length direction of the extension portion 2 (for example, second direction Y) is at an angle to an extension direction of the main body portion 1 (for example, first direction X), the extension portion 2 extends in a direction away from the main body portion 1, and a mounting structure 3 is disposed on the extension portion 2, and the mounting structure 3 is configured to mount the battery 30.

It is worth noting that the battery installation frame 10 of this embodiment of this application can be used for battery swapping under frame of the vehicle 1000, where the battery swapping under frame (battery swapping under frame) refers to a method of replenishing vehicle energy by flexibly replacing a swappable battery system installed under the vehicle chassis. The swappable battery system (swappable battery system) is a traction battery system (referred to as battery 30 in this application) that is entirely replaced during the battery swapping process of the vehicle 1000. For example, the swappable battery system generally includes a power battery, a battery management system, a swapping electrical interface, a swapping cooling interface, a swapping mechanical interface, and the like, and can be charged and discharged in a non-vehicle-mounted state. The terms and definitions of the embodiments of this application may be in accordance with GB/T 19596 Terminology of Electric Vehicles.

The vehicle beam 20 is a longitudinal beam or main beam at the underbody of the vehicle 1000, with a length direction of the vehicle beam 20 consistent with a length direction of the vehicle 1000, that is, the front-rear direction of the vehicle. "The main body portion 1 extends along a length direction of the vehicle beam 20" means that the extension direction of the main body portion 1 (for example, first direction X) is consistent with the length direction of the vehicle beam 20, that is, the front-rear direction of the vehicle 1000. Therefore, "a length direction of the extension portion 2 (for example, second direction Y) is at an angle to an extension direction of the main body portion 1 (for example, first direction X)" can be understood as the extension direction of the extension portion 2 intersecting with the length direction of the vehicle 1000, for example, at an acute angle, a right angle, or an obtuse angle.

Thus, the extension portion 2 and the battery 30 can be arranged along the length direction of the vehicle 1000, for example, the extension portion 2 may be located on the front side and/or rear side of the battery 30, and the extension portion 2 and the mounting structure 3 disposed on the extension portion 2 occupy space outside the battery 30 in the length direction of the vehicle 1000, for example, the space on the front side and/or rear side of the battery 30, without occupying space outside the battery 30 in the width direction of the vehicle 1000, for example, the space on the left and right sides of the battery 30. This helps to increase a dimension of the battery 30 in the width direction of the vehicle, for example, increasing the dimension of the battery 30 in the left-right direction.

It can be understood that a length of the vehicle 1000 is greater than a width of the vehicle 1000, and the vehicle 1000 has a larger accommodation space in the length direction, while the accommodation space in the width direction of the vehicle 1000 is limited. Utilizing the relatively ample space on the front and rear sides of the battery 30 to arrange the extension portion 2 and the mounting structure 3 can avoid the extension portion 2 and the mounting structure 3 occupying space on the left and right sides of the battery 30, thereby allowing the saved space in the left-right direction to be used to increase the dimension of the battery 30, and increasing the volumetric energy density of the battery 30.

Moreover, compared to the solution of arranging mounting structures on two side walls of the vehicle beam, since the length direction of the extension portion 2 (for example, second direction Y) is at an angle to the extension direction of the main body portion 1 (for example, first direction X) in some embodiments of this application, the extension portion 2 can provide ample space for arranging the mounting structure 3, facilitating flexible configuration of a distribution position, a quantity, and a structural form of the mounting structure 3 on the extension portion 2. This helps to enhance the installation strength of a larger-sized battery 30 mounted on the mounting structure 3 and improve the mounting reliability of the battery 30, and thus helps to increase the driving range of the vehicle 1000 per battery swap.

The structure of the mounting structure 3 is not limited and, for example, may include, but is not limited to, a mounting slot, a mounting hole, a mounting protrusion, a mounting pin, or a mounting screw, which is not restricted herein.

Additionally, it should be noted that the connection method between the main body portion 1 and the vehicle beam 20 is not limited, and may involve direct connection between the main body portion 1 and the portion of the vehicle beam 20 facing the main body portion 1, or indirect connection between the main body portion 1 and external components provided on the vehicle beam 20 facing the main body portion 1.

Furthermore, it should be noted that the connection position between the main body portion 1 and the vehicle beam 20 is not limited. For example, the main body portion 1 may be connected to at least one of the top, bottom, or side of the vehicle beam 20.

In some embodiments, referring again to FIGs. 3 and 4, the extension portion 2 is provided in plurality on at least one side of the main body portion 1 in a width direction of the main body portion 1 (for example, second direction Y), the plurality of extension portions 2 are spaced apart along an extension direction of the main body portion 1 (for example, first direction X), and a battery mounting space 4 is defined between two adjacent extension portions 2 along the extension direction of the main body portion 1 (for example, first direction X). It is worth noting that the width direction of the main body portion 1 (for example, second direction Y) is consistent with the width direction of the vehicle beam 20 (for example, direction Y shown in FIG. 3), such as the left-right direction of the vehicle 1000.

To be specific, a plurality of extension portions 2 are provided on at least one side of the main body portion 1 in the width direction of the main body portion 1 (for example, second direction Y), and a plurality of extension portions 2 on the same side in the width direction of the main body portion 1 (for example, second direction Y) are spaced apart along the extension direction of the main body portion 1 (for example, first direction X). For example, a plurality of extension portions 2 spaced apart in the front-rear direction may be provided on at least one of the left side and the right side of the main body portion 1.

It can be understood that the mounting structure 3 on the extension portion 2 is configured to mount the battery 30 in the battery mounting space 4, meaning that when the battery 30 is connected to the mounting structure 3, at least a portion of the battery 30 can be accommodated within the battery mounting space 4, presenting a mounted state.

In the above technical solution, two adjacent extension portions 2 along the extension direction of the main body portion 1 (for example, first direction X) can serve as outer walls of the battery mounting space 4, providing a certain degree of protection to the battery 30, reducing damage to the battery 30, and improving the reliability of the battery 30 in supplying electrical energy to the vehicle 1000.

Additionally, since the extension portion 2 is provided in plurality and the plurality of extension portions 2 are spaced apart along the extension direction of the main body portion 1 (for example, first direction X), this facilitates full utilization of the space of the vehicle 1000 in the length direction of the vehicle 1000 to arrange more extension portions 2, to define a greater quantity of battery mounting spaces 4, thereby allowing for mounting of a greater quantity of batteries 30. This can increase the dimension of the battery 30 while also increasing the quantity of mounted batteries 30, and further increasing the driving range of the vehicle 1000 per battery swap.

For example, referring again to FIGs. 3 and 4, four extension portions 2 are provided on one side of the vehicle beam 20 in the width direction of the vehicle beam 20, the four extension portions 2 are spaced apart along the extension direction of the main body portion 1 (for example, first direction X), and the four extension portions 2 define three battery mounting spaces 4, each battery mounting space 4 capable of mounting at least one battery 30. When the battery 30 is mounted on the mounting structure 3, at least a portion of the battery 30 is located within the battery mounting space 4, and in this case, two adjacent extension portions 2 can serve as outer walls of the battery mounting space 4 to provide a certain degree of protection to the battery 30 and reduce damage to the battery 30, thereby improving the reliability of the battery 30 in supplying electrical energy to the vehicle 1000.

Of course, the quantity of extension portions 2 described above is merely for illustrative purposes, for example, three, five, or more extension portions 2 may be provided on one side of the vehicle beam 20 in the width direction of the vehicle beam 20. The specific quantity can be set according to the specific requirements of the vehicle 1000.

When the battery installation frame 10 includes a plurality of battery mounting spaces 4, the extension portion 2 between two battery mounting spaces 4 can be used to separate the batteries 30 in the adjacent battery mounting spaces 4, which alleviates problems such as mutual impact and heat transfer between the batteries 30 in the two adjacent battery mounting spaces 4. Of course, the battery installation frame 10 may alternatively include only one battery mounting space 4.

In some embodiments, the battery mounting space 4 is through-going in a height direction of the extension portion 2 (for example, third direction Z). Herein, "the battery mounting space 4 is through-going in a height direction of the extension portion 2" means that two ends of the battery mounting space 4 in the height direction of the extension portion 2 are both open, without obstruction by structures of the battery installation frame 10. The height direction of the extension portion 2 may be a direction perpendicular to both a thickness direction of the extension portion 2 (for example, first direction X) and a length direction of the extension portion 2 (second direction Y).

For example, the height direction of the extension portion 2 may be set to be consistent with the height direction of the vehicle 1000, such that when the battery 30 is mounted in the battery mounting space 4, the two sides of the battery 30 in the height direction of the vehicle 1000 are not obstructed by the battery installation frame 10. For example, the extension portion 2, the main body portion 1, the mounting structure 3, and the like all do not occupy space of the battery 30 in the height direction of the vehicle 1000. This improves the space utilization of the battery 30 in the height direction of the vehicle 1000, helps to increase a dimension of the battery 30 in the height direction of the vehicle 1000, and helps to increase the volumetric energy density of the battery 30, thereby increasing the driving range of the vehicle 1000 per battery swap, ensuring the ground clearance of the battery 30, and maintaining the passability of the vehicle 1000. Moreover, it also facilitates heat dissipation of the battery 30 and helps to reduce the weight of the battery installation frame 10 and lower the vehicle load of the battery installation frame 10.

In some vehicles of the related art, a tray is typically used to install a battery pack at the vehicle underbody. To be specific, the battery pack is placed on the tray, and the tray is then installed to the vehicle underbody. During battery swapping, the tray is removed, the entire battery pack in the tray is replaced, and the tray is then reinstalled to the vehicle underbody. However, during battery swapping, the energy in the battery pack in the tray is often not fully depleted, and swapping the battery at this point results in energy waste.

In this embodiment of this application, the battery installation frame 10 includes a plurality of battery mounting spaces 4 arranged sequentially along the extension direction of the main body portion 1 (for example, first direction X), and the battery installation frame 10 is provided with a mounting structure 3 corresponding to each battery mounting space 4, such that each battery mounting space 4 can be used to mount a battery 30, and the mounting structures 3 corresponding to different battery mounting spaces 4 can be mutually independent, allowing each battery mounting space 4 to independently swap the mounted battery 30. Herein, "corresponding" in the context of the mounting structure 3 corresponding to the battery mounting space 4 refers to a relationship correspondence, including but not limited to positional correspondence.

However, this is not limited thereto. For example, in some embodiments, when a plurality of battery mounting spaces 4 are used to mount the same battery 30, for instance, when two battery mounting spaces 4 correspondingly arranged along the second direction Y are used to mount the same battery 30, the mounting structures 3 corresponding to these two battery mounting spaces 4 may be set to be mutually independent, or may also be set in a linked form, such that when mounting the same battery 30, the linked mounting structures 3 help to improve swapping efficiency.

It can be understood that when the battery 30 has a larger dimension, the same battery 30 may be simultaneously installed in a plurality of battery mounting spaces 4, while when the battery 30 has a smaller dimension, one battery 30 may correspond to only one battery mounting space 4, or a plurality of batteries 30 may correspond to one battery mounting space 4. In other words, the specific mounting method depends on the form of the battery 30 and is not restricted herein.

When using such a battery installation frame 10 to install the battery 30 to the vehicle, since the battery installation frame 10 includes a plurality of battery mounting spaces 4, and the battery installation frame 10 is provided with mounting structures 3 such that each battery mounting space 4 can be used to mount a battery 30, batteries 30 can be individually mounted to each battery mounting space 4. This allows the battery installation frame 10 to have the function of installing a plurality of batteries 30, and during battery swapping, only the battery 30 with depleted energy can be replaced, while retaining the battery 30 with remaining energy, thereby improving the energy utilization of the battery 30 and alleviating energy waste problem.

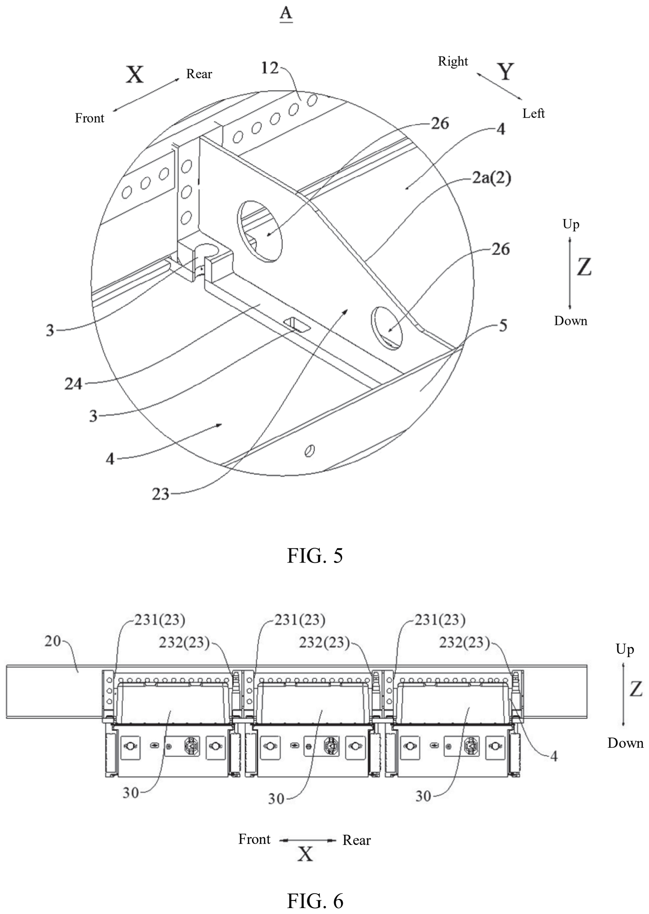

In some embodiments, referring to FIGs. 4 to 6, FIG. 5 is a partial enlarged view of portion A in FIG. 4, and FIG. 6 is an orthographic projection view of the connection between the battery installation frame 10 and the vehicle beam 20 as shown in FIG. 4, where the mounting structure 3 is arranged on a side of the extension portion 2 facing the battery mounting space 4, meaning that the extension portion 2 includes a mounting installation surface 23 facing the battery mounting space 4, and the mounting structure 3 is arranged on the side of the mounting installation surface 23 facing the battery mounting space 4.

Thus, the mounting structure 3 corresponds to the battery mounting space 4 it faces and is configured to mount the battery 30 in the battery mounting space 4 that the mounting structure 3 faces, thereby clearly defining the correspondence between the mounting structure 3 and the battery mounting space 4. When the battery 30 is inserted into the battery mounting space 4, it can be connected to the mounting structure 3 facing the battery mounting space 4, facilitating the mounting of the battery 30. Moreover, when there are a plurality of battery mounting spaces 4, the mounting structures 3 corresponding to different battery mounting spaces 4 are positioned differently and do not interfere with each other. This allows the mounting structure 3 corresponding to each battery mounting space 4 to have ample space for flexible configuration, enabling the mounting structure 3 to more easily and reliably mount the battery 30. Thus, the mounting structure 3 is arranged on the side of the extension portion 2 facing the battery mounting space 4, which helps to reduce the difficulty of arranging the mounting structure 3, allows ample space for flexibly configuring a structural form of the mounting structure 3, and enables the mounting structure 3 to more easily and reliably mount the battery 30.

In some embodiments, referring again to FIGs. 4 to 6, at least one extension portion 2 located in the middle among the plurality of extension portions 2 is a shared extension portion 2a. The shared extension portion 2a has the battery mounting space 4 on each of two sides of the main body portion 1 in the extension direction of the main body portion 1 (for example, first direction X), and the mounting structures 3 are respectively arranged on the two sides of each of the battery mounting spaces 4 located on two sides of the shared extension portion 2a.

It is worth noting that "at least one extension portion 2 located in the middle among the plurality of extension portions 2" refers to at least one extension portion 2, other than the two extension portions 2 at two ends, among the plurality of extension portions 2 spaced apart along the extension direction of the main body portion 1 (for example, first direction X). For example, when four extension portions 2 are provided on one side of the vehicle beam 20 in the width direction of the vehicle beam 20, at least one of the two middle extension portions 2 is a shared extension portion 2a. The shared extension portion 2a has two mounting installation surfaces 23 respectively facing the battery mounting spaces 4 located on its two sides.

Thus, when the quantity of battery mounting spaces 4 spaced apart along the extension direction of the main body portion 1 (for example, first direction X) is fixed, the quantity of extension portions 2 spaced apart along the extension direction of the main body portion 1 (for example, first direction X) can be reduced. For example, in a case of the minimum quantity of battery mounting spaces 4, the quantity of extension portions 2 on one side of the vehicle beam 20 in the width direction of the vehicle beam 20 can be one more than the quantity of battery mounting spaces 4, meaning only one extension portion 2 is provided between two adjacent battery mounting spaces 4 along the extension direction of the main body portion 1 (for example, first direction X), facilitating cost reduction and reducing the load of the vehicle 1000.

However, this application is not limited thereto. For example, two extension portions 2 may be provided between two adjacent battery mounting spaces 4 along the extension direction of the main body portion 1 (for example, first direction X), such that each extension portion 2 may arrange a mounting structure 3 corresponding to only one side of the battery mounting space 4, which can reduce the load-bearing force of each extension portion 2 on the battery and improve the mounting reliability of the battery 30.

In some embodiments, referring again to FIGs. 4 to 6, the mounting structures 3 on the two sides of the shared extension portion 2a in the extension direction of the main body portion 1 (for example, first direction X) are offset in their orthographic projections on a projection plane perpendicular to the extension direction of the main body portion 1 (for example, first direction X), meaning that the mounting structures 3 on the two mounting installation surfaces 23 of the shared extension portion 2a are offset in their orthographic projections along the extension direction of the main body portion 1 (for example, first direction X). For example, a distance from any mounting structure 3 on one side of the shared extension portion 2a to the main body portion 1 in the length direction of the extension portion 2 (for example, second direction Y) is different from a distance from any mounting structure 3 on the other side of the shared extension portion 2a to the main body portion 1 in the length direction of the extension portion 2 (for example, second direction Y).

Thus, the mounting structures 3 are arranged on the two sides of the shared extension portion 2a to are offset in their orthographic projections on a projection plane perpendicular to the extension direction of the main body portion 1 (for example, first direction X), which facilitates more reasonable stress distribution on the shared extension portion 2a. When batteries 30 in the battery mounting spaces 4 on the two sides of the shared extension portion 2a are respectively connected to the mounting structures 3 on the two sides of the shared extension portion 2a, problems such as deformation or fracture of the extension portion 2 caused by stress concentration can be alleviated, the service life of the shared extension portion 2a can be prolonged, and the mounting reliability of the battery 30 can be improved.

In some embodiments, referring again to FIGs. 4 to 6, the battery mounting space 4 is provided with the mounting structures 3 on the extension portions 2 located on both sides in the extension direction of the main body portion 1 (for example, first direction X). For example, the mounting installation surface 23 includes a first mounting installation surface 231 and a second mounting installation surface 232, where the first mounting installation surface 231 and the second mounting installation surface 232 are respectively side surfaces of two adjacent extension portions 2 that face the same battery mounting space 4, the first mounting installation surface 231 is provided with a mounting structure 3 on the side facing the battery mounting space 4, and the second mounting installation surface 232 is also provided with a mounting structure 3 on the side facing the battery mounting space 4, with the batteries 30 in the battery mounting space 4 being respectively connected to the two mounting structures 3.

Thus, the extension portions 2 on the two sides of the battery mounting space 4 in the extension direction of the main body portion 1 (for example, first direction X) can both support the battery 30 within the battery mounting space 4, and the mounting structures 3 on the two sides can disperse stress, alleviating problems such as deformation or fracture of the extension portion 2 caused by stress concentration, prolonging the service life of the shared extension portion 2a, and improving the mounting reliability of the battery 30.

Further, in some embodiments, the mounting structures 3 on the two sides of the battery mounting space 4 in the extension direction of the main body portion 1 (for example, first direction X) are offset in their orthographic projections on a projection plane perpendicular to the extension direction of the main body portion 1 (for example, first direction X). For example, a distance from any mounting structure 3 on one side of the battery mounting space 4 to the main body portion 1 in the length direction of the extension portion 2 (for example, second direction Y) is different from a distance from any mounting structure 3 on the other side of the battery mounting space 4 to the main body portion 1 in the length direction of the extension portion 2 (for example, second direction Y).

Thus, the mounting structures 3 are arranged on the two sides of the battery mounting space 4 to are offset in their orthographic projections on the projection plane perpendicular to the extension direction of the main body portion 1 (for example, first direction X), which further facilitates stress dispersion by the mounting structures 3 on the two sides, and further alleviates problems such as deformation or fracture of the extension portion 2 caused by stress concentration.

Additionally, when the mounting structures 3 on the two sides of the shared extension portion 2a in the extension direction of the main body portion 1 (for example, first direction X) are offset in their orthographic projections on a projection plane perpendicular to the extension direction of the main body portion 1 (for example, first direction X), and the mounting structures 3 on the two sides of the battery mounting space 4 in the extension direction of the main body portion 1 (for example, first direction X) are offset in their orthographic projections on the projection plane perpendicular to the extension direction of the main body portion 1 (for example, first direction X), a plurality of extension portions 2 can be constructed with the same structure, facilitating cost reduction and simplifying production processes.

Of course, this application is not limited thereto. For example, the mounting structures 3 on the two sides of the shared extension portion 2a in the extension direction of the main body portion 1 (for example, first direction X) may be configured to have overlapping orthographic projections on the projection plane perpendicular to the extension direction of the main body portion 1 (for example, first direction X). In this case, the mounting structures 3 on the two sides of the battery mounting space 4 in the extension direction of the main body portion 1 (for example, first direction X) may also have overlapping orthographic projections on the projection plane perpendicular to the extension direction of the main body portion 1 (for example, first direction X), simplifying processing and reducing costs.

In some embodiments, referring to FIGs. 4 and 5, a side of the extension portion 2 facing the battery mounting space 4 is provided with a plurality of mounting structures 3, at least two of which are spaced apart along a length direction of the extension portion 2 (for example, second direction Y).

Thus, this arrangement facilitates full utilization of space in the length direction of the extension portion 2 (for example, second direction Y) to arrange a greater quantity of mounting structures 3, which helps to enhance the mounting stability of the battery 30 or increase the quantity of batteries 30 mounted within the battery mounting space 4.

In some embodiments, referring to FIG. 5, the extension portion 2 includes a mounting edge 24 protruding into the battery mounting space 4, and the mounting structure 3 is located on the mounting edge 24. For example, the mounting edge 24 protrudes toward the interior of the battery mounting space 4 along the extension direction of the main body portion 1 (for example, first direction X).

Thus, providing the mounting edge 24 helps to reduce the difficulty of arranging the mounting structure 3, and easily achieves the mounting structure 3 being located on the side of the extension portion 2 facing the battery mounting space 4. Additionally, the mounting edge 24 can provide direct or indirect support to the battery 30 to some extent, so as to enhance the mounting stability of the battery 30.

In some embodiments, referring to FIGs. 4 and 5, the mounting edge 24 is located at a lower edge of the extension portion 2 in a height direction of the extension portion 2 (for example, third direction Z). Herein, two ends of the extension portion 2 in the height direction (for example, third direction Z) are defined as upper and lower ends, and when the height direction of the extension portion 2 is consistent with the height direction of the vehicle 1000, the two ends in the height direction are also the upper and lower ends in the gravitational direction.

Thus, positioning the mounting structure 3 at a lower height helps to reduce the maintenance difficulty of the mounting structure 3, also facilitates the mounting connection between the mounting structure 3 and the battery 30, and improves the compactness of coordination between the battery 30 and the extension portion 2. This reduces space waste, allowing the saved space to be used to further increase the dimension of the battery 30, thereby further improving the volumetric energy density of the battery 30.

For example, when a tool is used and extended upward to the position of the mounting structure 3 to perform the mounting connection between the mounting structure 3 and the battery 30, the raised position of the tool is lower than the extension portion 2, which can reduce the lifting height required for the tool. Moreover, the tool does not need to extend between the battery 30 and the extension portion 2, eliminating the need to increase the gap between the battery 30 and the extension portion 2 to accommodate the tool. This reduces space waste, allowing the saved space to be used to further increase the dimension of the battery 30, thereby increasing the volumetric energy density of the battery 30.

In some embodiments, referring to FIGs. 4 and 5, a length direction of the mounting edge 24 is the same as the length direction of the extension portion 2 (for example, second direction Y), and the mounting edge 24 is provided with a plurality of mounting structures 3 spaced apart along the length direction of the mounting edge 24.

Thus, since the length direction of the mounting edge 24 is the same as the length direction of the extension portion 2 (for example, second direction Y), this helps to reduce the processing difficulty of the mounting edge 24, allowing the mounting edge 24 to have a larger length dimension to accommodate a greater quantity of mounting structures 3. Arrangement of a plurality of mounting structures 3 spaced apart along the length direction of the mounting edge 24 helps to enhance the mounting stability of the battery 30 or helps to increase the quantity of batteries 30 mounted on the mounting edge 24.

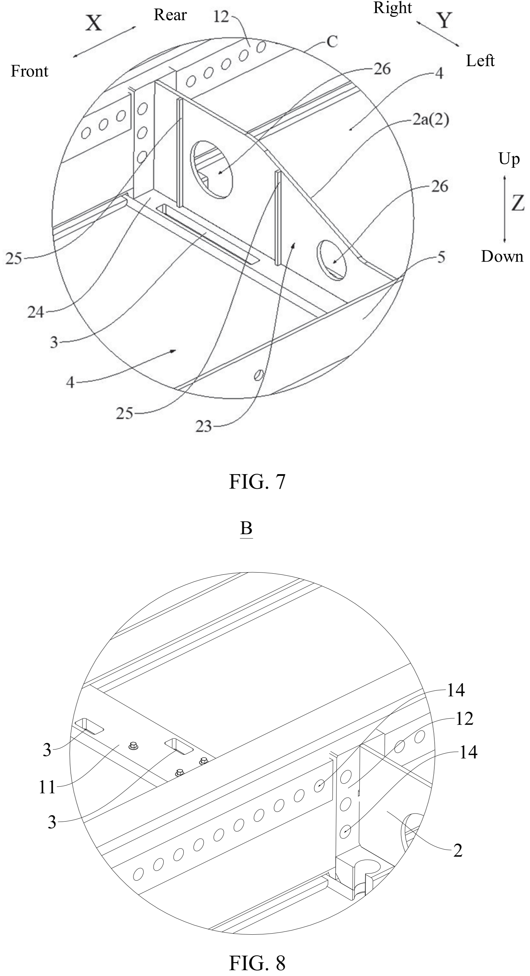

In some embodiments, referring to FIG. 7, FIG. 7 is a partial enlarged view of a battery installation frame 10 according to another embodiment of this application, where a length direction of the mounting edge 24 is the same as the length direction of the extension portion 2 (for example, second direction Y), and the mounting structure 3 on the mounting edge 24 is configured as one and extends along the length direction of the mounting edge 24.

Thus, providing only one mounting structure 3 on the mounting edge 24 helps to reduce the processing difficulty of the mounting structure 3. Moreover, the mounting structure 3 extends along the length direction of the mounting edge 24, in other words, a length direction of the mounting structure 3 is consistent with the length direction of the mounting edge 24. As a result, the mounting structure 3 has a larger length dimension, a larger force-bearing area, or more connection positions, which facilitates simultaneous connection with a plurality of connection structures on the battery 30, improving the mounting reliability of the battery 30, or facilitates simultaneous mounting of a plurality of batteries 30.

In some embodiments, the extension portion 2 is arranged on one side of the main body portion 1 in a width direction of the main body portion 1 (for example, second direction Y). It is worth noting that the width direction of the main body portion 1 (for example, second direction Y) is consistent with the width direction of the vehicle beam 20, and the width direction of the vehicle beam 20 is consistent with the width direction of the vehicle 1000, such as the left-right direction of the vehicle 1000. For example, the extension portion 2 is provided on the left side of the main body portion 1, or the extension portion 2 is provided on the right side of the main body portion 1.

Thus, arranging the extension portion 2 on only one side of the main body portion 1 in the width direction of the main body portion 1 (for example, second direction Y) can reduce the force transmitted from the extension portion 2 with the mounted battery 30 to the main body portion 1, and thus improve the connection reliability between the extension portion 2 and the main body portion 1, as well as the connection reliability between the main body portion 1 and the vehicle beam 20, thereby improving the mounting reliability of the battery 30.

It is worth noting that if the extension portion 2 is arranged on one side of the main body portion 1 in the width direction of the main body portion 1 (for example, second direction Y), and it is also desired to have extension portions 2 on two sides of the vehicle beam 20 in the width direction of the vehicle beam 20, at least two main body portions 1 can be installed on the vehicle beam 20, with an extension portion 2 arranged on the left side of one main body portion 1 and an extension portion 2 arranged on the right side of another main body portion 1, such that both the left and right sides of the vehicle beam 20 can have extension portions 2.

In some embodiments, referring to FIGs. 3 and 4, the extension portion 2 is arranged on each of two sides of the main body portion 1 in a width direction of the main body portion 1 (for example, second direction Y), meaning that the main body portion 1 is provided with a plurality of extension portions 2, at least two of which are respectively located on two sides of the main body portion 1 in the width direction of the main body portion 1 (for example, second direction Y). It is worth noting that the width direction of the main body portion 1 (for example, second direction Y) is consistent with the width direction of the vehicle beam 20, and the width direction of the vehicle beam 20 is consistent with the width direction of the vehicle 1000, such as the left-right direction of the vehicle 1000. For example, the extension portion 2 is provided on the left side of the main body portion 1, or the extension portion 2 is provided on the right side of the main body portion 1.

Thus, the extension portions 2 are arranged on the two sides of the main body portion 1 in the width direction of the main body portion 1 (for example, second direction Y), the extension portions 2 can be provided on the two sides of the vehicle beam 20 just by connecting one main body portion 1 to the vehicle beam 20. This allows the extension portions 2 on the two sides to be used for mounting batteries 30 respectively. For example, two parts of the same battery 30 located on the two sides of the vehicle beam 20 in the width direction of the vehicle beam 20 can be mounted, or two separate batteries 30 located on two sides of the vehicle beam 20 in the width direction of the vehicle beam 20 can be mounted, thereby increasing the mounting strength of the battery 30 or the quantity of mounted batteries 30.

In some embodiments, referring to FIGs. 3 and 4, the extension portion 2 includes a first extension portion 21 and a second extension portion 22 respectively arranged on two sides of the main body portion 1 in a width direction of the main body portion 1 (for example, second direction Y), where the first extension portion 21 and the second extension portion 22 have the same extension direction, and projections of the first extension portion 21 and the second extension portion 22 along the extension direction of the first extension portion 21 overlap.

It is worth noting that the width direction of the main body portion 1 (for example, second direction Y) is consistent with the width direction of the vehicle beam 20, such as the left-right direction of the vehicle 1000. For example, both the first extension portion 21 and the second extension portion 22 extend along the width direction of the vehicle beam 20, or both the first extension portion 21 and the second extension portion 22 extend along a direction inclined to the width direction of the vehicle beam 20, with the same inclination angle.

Thus, configuring the first extension portion 21 and the second extension portion 22 to have the same extension direction and their projections along the extension direction of the first extension portion 21 to overlap enables the first extension portion 21 and the second extension portion 22 to simultaneously mount two parts of the same battery 30 located on two sides of the vehicle beam 20 in the width direction of the vehicle beam 20. This allows the dimension of the battery 30 to be increased, reducing the quantity of batteries 30 and simplifying battery swapping complexity.

In some embodiments, referring to FIGs. 3 and 4, when at least one side of the main body portion 1 in the width direction of the main body portion 1 (for example, second direction Y) is provided with a plurality of extension portions 2 spaced apart along the extension direction of the main body portion 1 (for example, first direction X), the battery installation frame 10 further includes a reinforcing portion 5, the reinforcing portion 5 being configured to connect at least two extension portions 2 located on the same side of the main body portion 1 in the width direction of the main body portion 1 (for example, second direction Y). It is worth noting that this embodiment is applicable to both cases where "at least one extension portion 2 is arranged on each side of the main body portion 1 in the width direction of the main body portion 1" and where "an extension portion 2 is arranged on one side of the main body portion 1 in the width direction of the main body portion 1." Additionally, the at least two extension portions 2 connected by the reinforcing portion 5 may be adjacent or non-adjacent.

Furthermore, it is worth noting that the width direction of the main body portion 1 (for example, second direction Y) is consistent with the width direction of the vehicle beam 20, such as the left-right direction of the vehicle 1000. For example, at least two extension portions 2 on the left side of the main body portion 1 are connected by the reinforcing portion 5, and/or at least two extension portions 2 on the right side of the main body portion 1 are connected by the reinforcing portion 5.

Thus, this arrangement helps to enhance the overall structural strength of the battery installation frame 10, alleviate deformation of the extension portions 2 caused by stress, and improve the mounting reliability of the battery 30.

In some embodiments, the reinforcing portion 5 and the main body portion 1 are disposed on opposite sides of the extension portion 2 in the length direction of the extension portion 2 (for example, second direction Y). Thus, the two extension portions 2 defining the battery mounting space 4 can be connected at two ends in the length direction of the extension portion 2 (for example, second direction Y) through the main body portion 1 and the reinforcing portion 5, respectively. This forms a ring-shaped structure around the battery mounting space 4, which has higher structural strength and greater reliability for mounting the battery 30, and provides more comprehensive protection to the battery 30 from all sides, while allowing flexible positioning of the mounting structure 3.

In some embodiments, referring to FIG. 5, a height of the extension portion 2 (that is, a dimension in the height direction of the extension portion 2 (for example, third direction Z)) tends to decrease in a direction away from the main body portion 1. It is worth noting that "tends to decrease" may refer to a gradual decrease or a stepwise decrease.

Thus, configuring the height of the extension portion 2 to tend to decrease in a direction away from the main body portion 1 results in a smaller height in the region of the extension portion 2 away from the main body portion 1. In other words, the height of the end of the extension portion 2 connected to the main body portion 1 is relatively large, while the height of the end away from the main body portion 1 is relatively small, which can enhance the connection strength between the extension portion 2 and the main body portion 1, improve the reliability of the extension portion 2 in mounting the battery 30, and reduce the weight of the extension portion 2, thereby reducing the load of the vehicle 1000.

When the mounting structure 3 is located at a lower edge of the extension portion 2, for example, on the mounting edge 24, and the mounting edge 24 is located at the lower edge of the extension portion 2, the lower edge of the extension portion 2 can be configured to extend horizontally, while an upper edge of the extension portion 2 tends to decrease in a direction away from the main body portion 1. It is worth noting that "tends to decrease" may refer to a gradual decrease or a stepwise decrease. This helps to ensure that the mounting structures 3 are all located at the same horizontal height, and facilitates the operations of mounting the battery 30.

In some embodiments, as shown in FIG. 7, the extension portion 2 is provided with reinforcing ribs 25. The structural form of the reinforcing rib 25 is not limited and may be, for example, linear, curved, or cross-shaped. Thus, providing the reinforcing ribs 25 helps to enhance the structural strength of the extension portion 2 and alleviate the problem of deformation caused by stress on the extension portion 2.

For example, typically, the extension portion 2 that is farther from the main body portion 1 is more prone to deformation. At least some of the reinforcing ribs 25 can be arranged close to a middle of the extension portion 2 in the length direction of the extension portion 2 (for example, second direction Y), that is, generally centered or substantially centered, for example, within a range between 1/3 and 2/3 of the extension portion 2 in the length direction of the extension portion 2. This can effectively enhance the structural strength of the extension portion 2 with a reduced quantity of reinforcing ribs 25, and improve the reliability of the extension portion 2 in mounting the battery 30.

For example, when the battery 30 is mounted on the mounting structure 3 of the extension portion 2, the position of the mounting structure 3 on the extension portion 2 is subject to concentrated stress and is prone to deformation or damage. Therefore, at least some of the reinforcing ribs 25 can be arranged corresponding to the mounting structure 3 in the height direction of the extension portion 2 (for example, third direction Z), which can effectively enhance the structural strength of the extension portion 2 with a reduced quantity of reinforcing ribs 25, and improve the reliability of the extension portion 2 in mounting the battery 30.

For example, when the extension portion 2 is provided with a plurality of mounting structures 3, at least some of the reinforcing ribs 25 are arranged corresponding to a position between two adjacent mounting structures 3 along the height direction of the extension portion 2 (for example, third direction Z). When the battery 30 is mounted on the mounting structure 3 of the extension portion 2, the position of the mounting structure 3 of the extension portion 2 is subject to concentrated stress and is prone to deformation or damage. Arranging at least some of the reinforcing ribs 25 corresponding to a position between two adjacent mounting structures 3 can enhance the structural strength of the extension portion 2 between the two adjacent mounting structures 3, alleviate problems of fracture caused by stress concentration between the two adjacent mounting structures 3, and improve the reliability of the extension portion 2 in mounting the battery 30.

In some embodiments, referring to FIG. 5, the extension portion 2 is provided with a first weight-reducing structure 26. For example, the first weight-reducing structure 26 may include, but is not limited to, weight-reducing holes, weight-reducing slots, or thinning treatments.

Thus, providing the first weight-reducing structure 26 helps to reduce the weight of the extension portion 2, and facilitates a lightweight design of the battery installation frame 10.

In some embodiments, referring to FIG. 4, the main body portion 1 includes a beam avoidance groove 13, where the beam avoidance groove 13 has an opening running through along the extension direction of the main body portion 1 (for example, first direction X).

Thus, providing the beam avoidance groove 13 with an opening running through along the extension direction of the main body portion 1 (for example, first direction X) facilitates the accommodation of at least a portion of the vehicle beam 20 within the beam avoidance groove 13. Moreover, the opening can avoid the vehicle beam 20, helping to prevent interference between the battery installation frame 10 and the vehicle beam 20. This reduces the difficulty of assembling and disassembling the battery installation frame 10, improves the compactness of coordination between the main body portion 1 and the vehicle beam 20, and fully utilizes the space close to the vehicle beam 20 to arrange the battery 30, thereby facilitating an increase in the dimension of the battery 30.

It is worth noting that the specific composition of the vehicle beam 20 according to the embodiments of this application is not limited. For example, it may include two longitudinal beams 201 extending along the length direction of the vehicle 1000 (for example, first direction X) and at least one cross beam 202 extending along the width direction of the vehicle 1000 (for example, second direction Y), with the two longitudinal beams 201 spaced apart along the width direction of the vehicle 1000, and the cross beam 202 connecting the two longitudinal beams 201.

In some embodiments, referring to FIG. 4, the main body portion 1 includes a first main wall 11 and two second main walls 12, where the first main wall 11 is arranged along a width direction of the main body portion 1 (for example, second direction Y), the two second main walls 12 are arranged along the extension direction of the main body portion 1 (for example, first direction X), and the two second main walls 12 are respectively connected to two ends of the first main wall 11 in the width direction of the main body portion 1 (for example, second direction Y), to form the beam avoidance groove 13 with an open top between the first main wall 11 and the two second main walls 12.

It is worth noting that the width direction of the main body portion 1 (for example, second direction Y) is consistent with the width direction of the vehicle beam 20, such as the left-right direction of the vehicle 1000. "The first main wall 11 is arranged along a width direction of the main body portion 1 (for example, second direction Y)" means that a length direction of the first main wall 11 is consistent with the width direction of the main body portion 1 (for example, second direction Y). "The two second main walls 12 are arranged along the extension direction of the main body portion 1 (for example, first direction X)" means that a length direction of the second main walls 12 is consistent with the extension direction of the main body portion 1 (for example, first direction X).

Thus, the beam avoidance groove 13 can be defined by the first main wall 11 and the two second main walls 12, which helps to reduce the difficulty in forming the beam avoidance groove 13. Moreover, the two second main walls 12 are respectively connected to two ends of the first main wall 11 in the width direction of the first main wall 11, which facilitates the formation of the opening running through along the length direction of the main body portion 1. Additionally, since the beam avoidance groove 13 has an open top, the main body portion 1 can be pushed upward from bottom to top, allowing the vehicle beam 20 to enter the beam avoidance groove 13, and thus helping to reduce the difficulty of assembling the battery installation frame 10 to the vehicle beam 20. This allows the battery installation frame 10 to be installed subsequently on a vehicle beam 20 that has already been assembled, making the battery installation frame 10 applicable to various vehicle models. This application is not limited thereto. For example, in other embodiments of this application, the beam avoidance groove 13 may be configured with an open bottom, in which case the battery installation frame 10 can be assembled with the vehicle beam 20 simultaneously during the assembly of the vehicle beam 20.

For example, as shown in FIG. 4, the first main wall 11 may be connected between the lower ends of the two second main walls 12, such that the beam avoidance groove 13 is located above the first main wall 11, resulting in a larger height dimension of the beam avoidance groove 13 with an open top. This allows the beam avoidance groove 13 to accommodate the vehicle beam 20 to a greater extent, thereby improving the compactness of coordination between the main body portion 1 and the vehicle beam 20 and reducing space waste.

For example, at least one of the first main wall 11 and the second main walls 12 may be fixedly connected to the vehicle beam 20 by fasteners such as screws, to meet the requirement of installing the main body portion 1 to the vehicle beam 20.

In some embodiments, referring to FIG. 5, the extension portion 2 is connected to the second main wall 12. Thus, this arrangement can reduce the difficulty of connecting the extension portion 2 to the main body portion 1. Additionally, both of the second main walls 12 on two sides can be used to connect the extension portions 2, allowing the extension portions 2 to be located on two sides of the vehicle beam 20 in the width direction of the vehicle beam 20. In this way, the battery 30 can be arranged in the width direction of the vehicle beam 20, thereby increasing the dimension of the battery or increasing the quantity of batteries 30.

In some embodiments, referring to FIG. 8, the first main wall 11 and/or the second main wall 12 is provided with a second weight-reducing structure 14. For example, the second weight-reducing structure 14 may include, but is not limited to, weight-reducing holes, weight-reducing slots, or thinning treatment.

Thus, the second weight-reducing structure 14 can be provided on the first main wall 11 and/or the second weight-reducing structure 14 can be provided on the second main wall 12, which helps to reduce the weight of the first main wall 11 and/or the second main wall 12, and facilitates a lightweight design of the battery installation frame 10.

In some embodiments, referring to FIG. 8, the first main wall 11 is provided with at least one mounting structure 3. It is worth noting that the battery 30 may be mounted only on the mounting structure 3 on the extension portion 2, only on the mounting structure 3 on the first main wall 11, or simultaneously on the mounting structures 3 on both the extension portion 2 and the first main wall 11.

Thus, providing the mounting structure 3 on the first main wall 11 can fully utilize the installation space at the first main wall 11, improving space utilization and helping to increase the quantity of mounting points for the mounted battery 30 or the quantity of batteries 30 that can be mounted.

In some embodiments, the first main wall 11 and the two second main walls 12 are integrally formed. Thus, configuring the first main wall 11 and the two second main walls 12 as an integrally formed structure helps to reduce production processes, thereby lowering production costs. Of course, this is not limited thereto. The first main wall 11 and the second main walls 12 may also be configured as separate structures and assembled together, improving structural reliability.

In some embodiments, the main body portion 1 and the extension portion 2 are integrally formed. Thus, configuring the main body portion 1 and the extension portion 2 as an integrally formed structure helps to reduce production processes, thereby lowering production costs. Of course, this is not limited thereto. The main body portion 1 and the extension portion 2 may also be configured as separate structures and assembled together, improving structural reliability.

According to a second aspect, referring to FIG. 4, this application provides a frame assembly 100, including a vehicle beam 20 and the battery installation frame 10 according to any one of the above embodiments, where the battery installation frame 10 is configured to install a battery 30 to the vehicle beam 20.

Thus, when installing the battery 30 to the vehicle beam 20 using the battery installation frame 10, the battery mounting space can be expanded, facilitating the mounting of a larger-sized battery 30 on the battery installation frame 10, thereby increasing the driving range of the vehicle 1000 per battery swap.

According to a third aspect, this application provides another embodiment of a frame assembly. The frame assembly includes a vehicle beam 20 and an extension portion 2. It is worth noting that, compared to the frame assembly 100 according to the second aspect, the frame assembly according to the third aspect in the embodiments of this application may not include a main body portion 1 configured to be connected to the vehicle beam 20, or may include a main body portion 1 configured to be connected to the vehicle beam 20, but the shape of the main body portion 1 is not limited. For example, the main body portion 1 may extend along the length direction of the vehicle beam 20 (for example, first direction X), or the main body portion 1 may not extend along the length direction of the vehicle beam 20 (for example, first direction X), and the shape of the main body portion 1 can be flexibly designed according to actual needs.

In some embodiments, as shown in FIGs. 3 and 4, at least a part of the extension portion 2 is located on one side of the vehicle beam 20 in a width direction of the vehicle beam 20 (for example, second direction Y), the part of the extension portion 2 located on one side of the vehicle beam 20 in the width direction of the vehicle beam 20 (for example, second direction Y) is at an angle to a length direction of the vehicle beam 20 (for example, first direction X), the extension portion 2 extends in a direction away from the vehicle beam 20, a mounting structure 3 is disposed on the part of the extension portion 2 located on one side of the vehicle beam 20 in the width direction of the vehicle beam 20 (for example, second direction Y), and the mounting structure 3 is configured to mount a battery 30.

The vehicle beam 20 is a longitudinal beam or main beam at the underbody of the vehicle 1000, with a length direction of the vehicle beam 20 (for example, first direction X) consistent with a length direction of the vehicle 1000, that is, the front-rear direction of the vehicle. Therefore, "the part of the extension portion 2 located on one side of the vehicle beam 20 in the width direction of the vehicle beam 20 (for example, second direction Y) is at an angle to a length direction of the vehicle beam 20 (for example, first direction X)" can be understood as the extension direction of the part of the extension portion 2 located on one side of the vehicle beam 20 in the width direction of the vehicle beam 20 (for example, second direction Y) intersecting with the length direction of the vehicle 1000, for example, at an acute angle, a right angle, or an obtuse angle.

Thus, the extension portion 2 and the battery 30 can be arranged along the length direction of the vehicle 1000, for example, the extension portion 2 may be located on the front side and/or rear side of the battery 30, and the extension portion 2 and the mounting structure 3 disposed on the extension portion 2 occupy space outside the battery 30 in the length direction of the vehicle 1000, for example, the space on the front side and/or rear side of the battery 30, without occupying space outside the battery 30 in the width direction of the vehicle 1000, for example, the space on the left and right sides of the battery 30. This helps to increase a dimension of the battery 30 in the width direction of the vehicle, for example, increasing the dimension of the battery 30 in the left-right direction.

It can be understood that a length of the vehicle 1000 is greater than a width of the vehicle 1000, and the vehicle 1000 has a larger accommodation space in the length direction, while the accommodation space in the width direction of the vehicle 1000 is limited. Utilizing the relatively ample space on the front and rear sides of the battery 30 to arrange the extension portion 2 and the mounting structure 3 can avoid the extension portion 2 and the mounting structure 3 occupying space on the left and right sides of the battery 30, thereby allowing the saved space in the left-right direction to be used to increase the dimension of the battery 30, and increasing the volumetric energy density of the battery 30.

Moreover, compared to the solution of arranging mounting structures on two side walls of the vehicle beam, since the part of the extension portion 2 located on one side of the vehicle beam 20 in the width direction of the vehicle beam 20 (for example, second direction Y) is at an angle to the length direction of the vehicle beam 20 (for example, first direction X) in some embodiments of this application, the extension portion 2 can provide ample space for arranging the mounting structure 3, facilitating flexible configuration of a distribution position, a quantity, and a structural form of the mounting structure 3 on the extension portion 2. This helps to enhance the installation strength of a larger-sized battery 30 mounted on the mounting structure 3 and improve the mounting reliability of the battery 30, and thus helps to increase the driving range of the vehicle 1000 per battery swap.

The structure of the mounting structure 3 is not limited and, for example, may include, but is not limited to, a mounting slot, a mounting hole, a mounting protrusion, a mounting pin, or a mounting screw, which is not restricted herein.

In some embodiments, referring again to FIGs. 3 and 4, the extension portion 2 is provided in plurality on at least one side of the vehicle beam 20 in a width direction of the vehicle beam 20 (for example, second direction Y), the plurality of extension portions 2 are spaced apart along a length direction of the vehicle beam 20 (for example, first direction X), and a battery mounting space 4 is defined between two adjacent extension portions 2 along the length direction of the vehicle beam 20 (for example, first direction X).

To be specific, a plurality of extension portions 2 are provided on at least one side of the vehicle beam 20 in the width direction of the vehicle beam 20 (for example, second direction Y), and a plurality of extension portions 2 on the same side in the width direction of the vehicle beam 20 (for example, second direction Y) are spaced apart along the length direction of the vehicle beam 20 (for example, first direction X). It is worth noting that the width direction of the vehicle beam 20 (for example, second direction Y) is consistent with the width direction of the vehicle 1000, for example, the left-right direction of the vehicle 1000. Therefore, a plurality of extension portions 2 spaced apart in the front-rear direction may be provided on at least one of the left side and the right side of the vehicle beam 20.

It can be understood that the mounting structure 3 on the extension portion 2 is configured to mount the battery 30 in the battery mounting space 4, meaning that when the battery 30 is connected to the mounting structure 3, at least a portion of the battery 30 can be accommodated within the battery mounting space 4, presenting a mounted state.

In the above technical solution, two adjacent extension portions 2 along the length direction of the vehicle beam 20 (for example, first direction X) can serve as outer walls of the battery mounting space 4, providing a certain degree of protection to the battery 30, reducing damage to the battery 30, and improving the reliability of the battery 30 in supplying electrical energy to the vehicle 1000.

Additionally, since the extension portion 2 is provided in plurality and the plurality of extension portions 2 are spaced apart along the length direction of the vehicle beam 20 (for example, first direction X), this facilitates full utilization of the space of the vehicle 1000 in the length direction of the vehicle 1000 to arrange more extension portions 2, to define a greater quantity of battery mounting spaces 4, thereby allowing for mounting of a greater quantity of batteries 30. This can increase the dimension of the battery 30 while also increasing the quantity of mounted batteries 30, and further increasing the driving range of the vehicle 1000 per battery swap.

For example, referring again to FIGs. 3 and 4, four extension portions 2 are provided on one side of the vehicle beam 20 in the width direction of the vehicle beam 20, the four extension portions 2 are spaced apart along the length direction of the vehicle beam 20 (for example, first direction X), and the four extension portions 2 define three battery mounting spaces 4, each battery mounting space 4 capable of mounting at least one battery 30. When the battery 30 is mounted on the mounting structure 3, at least a portion of the battery 30 is located within the battery mounting space 4, and in this case, two adjacent extension portions 2 can serve as outer walls of the battery mounting space 4 to provide a certain degree of protection to the battery 30 and reduce damage to the battery 30, thereby improving the reliability of the battery 30 in supplying electrical energy to the vehicle 1000.

Of course, the quantity of extension portions 2 described above is merely for illustrative purposes, for example, three, five, or more extension portions 2 may be provided on one side of the vehicle beam 20 in the width direction of the vehicle beam 20. The specific quantity can be set according to the specific requirements of the vehicle 1000.

When the battery installation frame 10 includes a plurality of battery mounting spaces 4, the extension portion 2 between two battery mounting spaces 4 can be used to separate the batteries 30 in the adjacent battery mounting spaces 4, which alleviates problems such as mutual impact and heat transfer between the batteries 30 in the two adjacent battery mounting spaces 4. Of course, the battery installation frame 10 may alternatively include only one battery mounting space 4.

In some embodiments, the battery mounting space 4 is through-going in a height direction of the vehicle beam 20 (for example, third direction Z). Herein, "the battery mounting space 4 is through-going in a height direction of the vehicle beam 20" means that two ends of the battery mounting space 4 in the height direction of the vehicle beam 20 are both open, without obstruction by structures of the battery installation frame 10. The height direction of the vehicle beam 20 is consistent with the height direction of the vehicle 1000.

Thus, when the battery 30 is mounted in the battery mounting space 4, the two sides of the battery 30 in the height direction of the vehicle 1000 are not obstructed by the battery installation frame 10. For example, the extension portion 2, the main body portion 1, the mounting structure 3, and the like all do not occupy space of the battery 30 in the height direction of the vehicle 1000. This improves the space utilization of the battery 30 in the height direction of the vehicle 1000, helps to increase a dimension of the battery 30 in the height direction of the vehicle 1000, and helps to increase the volumetric energy density of the battery 30, thereby increasing the driving range of the vehicle 1000 per battery swap, ensuring the ground clearance of the battery 30, and maintaining the passability of the vehicle 1000. Moreover, it also facilitates heat dissipation of the battery 30 and helps to reduce the weight of the battery installation frame 10 and lower the vehicle load of the battery installation frame 10.

In some vehicles of the related art, a tray is typically used to install a battery pack at the vehicle underbody. To be specific, the battery pack is placed on the tray, and the tray is then installed to the vehicle underbody. During battery swapping, the tray is removed, the entire battery pack in the tray is replaced, and the tray is then reinstalled to the vehicle underbody. However, during battery swapping, the energy in the battery pack in the tray is often not fully depleted, and swapping the battery at this point results in energy waste.

In this embodiment of this application, the battery installation frame 10 includes a plurality of battery mounting spaces 4 arranged sequentially along the length direction of the vehicle beam 20 (for example, first direction X), and the battery installation frame 10 is provided with a mounting structure 3 corresponding to each battery mounting space 4, such that each battery mounting space 4 can be used to mount a battery 30, and the mounting structures 3 corresponding to different battery mounting spaces 4 can be mutually independent, allowing each battery mounting space 4 to independently swap the mounted battery 30. Herein, "corresponding" in the context of the mounting structure 3 corresponding to the battery mounting space 4 refers to a relationship correspondence, including but not limited to positional correspondence.

However, this is not limited thereto. For example, in some embodiments, when a plurality of battery mounting spaces 4 are used to mount the same battery 30, for instance, when two battery mounting spaces 4 correspondingly arranged along the second direction Y are used to mount the same battery 30, the mounting structures 3 corresponding to these two battery mounting spaces 4 may be set to be mutually independent, or may also be set in a linked form, such that when mounting the same battery 30, the linked mounting structures 3 help to improve swapping efficiency.

It can be understood that when the battery 30 has a larger dimension, the same battery 30 may be simultaneously installed in a plurality of battery mounting spaces 4, while when the battery 30 has a smaller dimension, one battery 30 may correspond to only one battery mounting space 4, or a plurality of batteries 30 may correspond to one battery mounting space 4. In other words, the specific mounting method depends on the form of the battery 30 and is not restricted herein.

When using such a battery installation frame 10 to install the battery 30 to the vehicle, since the battery installation frame 10 includes a plurality of battery mounting spaces 4, and the battery installation frame 10 is provided with mounting structures 3 such that each battery mounting space 4 can be used to mount a battery 30, batteries 30 can be individually mounted to each battery mounting space 4. This allows the battery installation frame 10 to have the function of installing a plurality of batteries 30, and during battery swapping, only the battery 30 with depleted energy can be replaced, while retaining the battery 30 with remaining energy, thereby improving the energy utilization of the battery 30 and alleviating energy waste problems.

In some embodiments, referring to FIGs. 4 to 6, FIG. 5 is a partial enlarged view of portion A in FIG. 4, and FIG. 6 is an orthographic projection view of the connection between the battery installation frame 10 and the vehicle beam 20 as shown in FIG. 4, where the mounting structure 3 is arranged on a side of the extension portion 2 facing the battery mounting space 4, meaning that the extension portion 2 includes a mounting installation surface 23 facing the battery mounting space 4, and the mounting structure 3 is arranged on the side of the mounting installation surface 23 facing the battery mounting space 4.

Thus, the mounting structure 3 corresponds to the battery mounting space 4 it faces and is configured to mount the battery 30 in the battery mounting space 4 that the mounting structure 3 faces, thereby clearly defining the correspondence between the mounting structure 3 and the battery mounting space 4. When the battery 30 is inserted into the battery mounting space 4, it can be connected to the mounting structure 3 facing the battery mounting space 4, facilitating the mounting of the battery 30. Moreover, when there are a plurality of battery mounting spaces 4, the mounting structures 3 corresponding to different battery mounting spaces 4 are positioned differently and do not interfere with each other. This allows the mounting structure 3 corresponding to each battery mounting space 4 to have ample space for flexible configuration, enabling the mounting structure 3 to more easily and reliably mount the battery 30. Thus, the mounting structure 3 is arranged on the side of the extension portion 2 facing the battery mounting space 4, which helps to reduce the difficulty of arranging the mounting structure 3, allows ample space for flexibly configuring a structural form of the mounting structure 3, and enables the mounting structure 3 to more easily and reliably mount the battery 30.

In some embodiments, referring again to FIGs. 4-6, at least one extension portion 2 located in the middle among the plurality of extension portions 2 is a shared extension portion 2a. The shared extension portion 2a has battery mounting spaces 4 on two sides of the vehicle beam 20 in the length direction of the vehicle beam 20 (for example, first direction X), and mounting structures 3 are respectively arranged on two sides of each of the battery mounting spaces 4 located on two sides of the shared extension portion 2a.

It is worth noting that "at least one extension portion 2 located in the middle among the plurality of extension portions 2" refers to at least one extension portion 2, other than the two extension portions 2 at two ends, among the plurality of extension portions 2 spaced apart along the length direction of the vehicle beam 20 (for example, first direction X). For example, when four extension portions 2 are provided on one side of the vehicle beam 20 in the width direction of the vehicle beam 20, at least one of the two middle extension portions 2 is a shared extension portion 2a. The shared extension portion 2a has two mounting installation surfaces 23 respectively facing the battery mounting spaces 4 on the two sides of each of the battery mounting spaces 4 located on its two sides.

Thus, when the quantity of battery mounting spaces 4 spaced apart along the length direction of the vehicle beam 20 (for example, first direction X) is fixed, the quantity of extension portions 2 spaced apart along the length direction of the vehicle beam 20 (for example, first direction X) can be reduced. For example, in a case of the minimum quantity of battery mounting spaces 4, the quantity of extension portions 2 on one side of the vehicle beam 20 in the width direction of the vehicle beam 20 can be one more than the quantity of battery mounting spaces 4, meaning only one extension portion 2 is provided between two adjacent battery mounting spaces 4 along the length direction of the vehicle beam 20 (for example, first direction X), facilitating cost reduction and reducing the load of the vehicle 1000.

However, this application is not limited thereto. For example, two extension portions 2 may be provided between two adjacent battery mounting spaces 4 along the length direction of the vehicle beam 20 (for example, first direction X), such that each extension portion 2 may arrange a mounting structure 3 corresponding to only one side of the battery mounting space 4, which can reduce the load-bearing force of each extension portion 2 on the battery and improve the mounting reliability of the battery 30.

In some embodiments, referring again to FIGs. 4-6, the mounting structures 3 on the two sides of the shared extension portion 2a in the length direction of the vehicle beam 20 (for example, first direction X) are offset in their orthographic projections on a projection plane perpendicular to the length direction of the vehicle beam 20 (for example, first direction X), meaning that the mounting structures 3 on the two mounting installation surfaces 23 of the shared extension portion 2a are offset in their orthographic projections along the length direction of the vehicle beam 20 (for example, first direction X). For example, a distance from any mounting structure 3 on one side of the shared extension portion 2a to the vehicle beam 20 in the width direction of the vehicle beam 20 (for example, second direction Y) is different from a distance from any mounting structure 3 on the other side of the shared extension portion 2a to the vehicle beam 20 in the width direction of the vehicle beam 20 (for example, second direction Y).

Thus, the mounting structures 3 are arranged on the two sides of the shared extension portion 2a to are offset in their orthographic projections on a projection plane perpendicular to the length direction of the vehicle beam 20 (for example, first direction X), which facilitates more reasonable stress distribution on the shared extension portion 2a. When batteries 30 in the battery mounting spaces 4 on the two sides of the shared extension portion 2a are respectively connected to the mounting structures 3 on the two sides of the shared extension portion 2a, problems such as deformation or fracture of the extension portion 2 caused by stress concentration can be alleviated, the service life of the shared extension portion 2a can be prolonged, and the mounting reliability of the battery 30 can be improved.

In some embodiments, referring again to FIGs. 4-6, the battery mounting space 4 is provided with the mounting structures 3 on the extension portions 2 located on both sides in the length direction of the vehicle beam 20 (for example, first direction X). For example, the mounting installation surface 23 includes a first mounting installation surface 231 and a second mounting installation surface 232, where the first mounting installation surface 231 and the second mounting installation surface 232 are respectively side surfaces of two adjacent extension portions 2 that face the same battery mounting space 4, the first mounting installation surface 231 is provided with a mounting structure 3 on the side facing the battery mounting space 4, and the second mounting installation surface 232 is also provided with a mounting structure 3 on the side facing the battery mounting space 4, with the batteries 30 in the battery mounting space 4 being respectively connected to the two mounting structures 3.

Thus, the extension portions 2 on the two sides of the battery mounting space 4 in the length direction of the vehicle beam 20 (for example, first direction X) can both support the battery 30 within the battery mounting space 4, and the mounting structures 3 on the two sides can disperse stress, alleviating problems such as deformation or fracture of the extension portion 2 caused by stress concentration, prolonging the service life of the shared extension portion 2a, and improving the mounting reliability of the battery 30.

Further, in some embodiments, the mounting structures 3 on the two sides of the battery mounting space 4 in the length direction of the vehicle beam 20 (for example, first direction X) are offset in their orthographic projections on the projection plane perpendicular to the length direction of the vehicle beam 20 (for example, first direction X). For example, a distance from any mounting structure 3 on one side of the battery mounting space 4 to the vehicle beam 20 in the width direction of the vehicle beam 20 (for example, second direction Y) is different from a distance from any mounting structure 3 on the other side of the battery mounting space 4 to the vehicle beam 20 in the width direction of the vehicle beam 20 (for example, second direction Y).

Thus, the mounting structures 3 are arranged on the two sides of the battery mounting space 4 to are offset in their orthographic projections on the projection plane perpendicular to the length direction of the vehicle beam 20 (for example, first direction X), which further facilitates stress dispersion by the mounting structures 3 on the two sides, and further alleviates problems such as deformation or fracture of the extension portion 2 caused by stress concentration.

Additionally, when the mounting structures 3 on the two sides of the shared extension portion 2a in the length direction of the vehicle beam 20 (for example, first direction X) are offset in their orthographic projections on a projection plane perpendicular to the length direction of the vehicle beam 20 (for example, first direction X), and the mounting structures 3 on two sides of the battery mounting space 4 in the length direction of the vehicle beam 20 (for example, first direction X) are offset in their orthographic projections on the projection plane perpendicular to the length direction of the vehicle beam 20 (for example, first direction X), a plurality of extension portions 2 can be constructed with the same structure, facilitating cost reduction and simplifying production processes.

Of course, this application is not limited thereto. For example, the mounting structures 3 on the two sides of the shared extension portion 2a in the length direction of the vehicle beam 20 (for example, first direction X) may be configured to have overlapping orthographic projections on the projection plane perpendicular to the length direction of the vehicle beam 20 (for example, first direction X). In this case, the mounting structures 3 on the two sides of the battery mounting space 4 in the length direction of the vehicle beam 20 (for example, first direction X) may also have overlapping orthographic projections on the projection plane perpendicular to the length direction of the vehicle beam 20 (for example, first direction X), simplifying processing and reducing costs.

In some embodiments, referring to FIGs. 4 and 5, a side of the extension portion 2 facing the battery mounting space 4 is provided with a plurality of mounting structures 3, at least two of which are spaced apart along a width direction of the vehicle beam 20 (for example, second direction Y).

Thus, this arrangement facilitates full utilization of space in the width direction of the vehicle beam 20 (for example, second direction Y) to arrange a greater quantity of mounting structures 3, which helps to enhance the mounting stability of the battery 30 or increase the quantity of batteries 30 mounted within the battery mounting space 4.

In some embodiments, referring to FIG. 5, the extension portion 2 includes a mounting edge 24 protruding into the battery mounting space 4, and the mounting structure 3 is located on the mounting edge 24. For example, the mounting edge 24 protrudes toward the interior of the battery mounting space 4 along the length direction of the vehicle beam 20 (for example, first direction X).

Thus, providing the mounting edge 24 helps to reduce the difficulty of arranging the mounting structure 3, and easily achieves the mounting structure 3 being located on the side of the extension portion 2 facing the battery mounting space 4. Additionally, the mounting edge 24 can provide direct or indirect support to the battery 30, so as to enhance the mounting stability of the battery 30.

In some embodiments, referring to FIGs. 4 and 5, the mounting edge 24 is located at a lower edge of the extension portion 2 in a height direction of the vehicle beam 20 (for example, third direction Z). The height direction of the vehicle beam 20 (for example, third direction Z) is consistent with the height direction of the vehicle 1000, that is, the gravitational direction.

Thus, positioning the mounting structure 3 at a lower height helps to reduce the maintenance difficulty of the mounting structure 3, also facilitates the mounting connection between the mounting structure 3 and the battery 30, and improves the compactness of coordination between the battery 30 and the extension portion 2. This reduces space waste, allowing the saved space to be used to further increase the dimension of the battery 30, thereby further improving the volumetric energy density of the battery 30.

For example, when a tool is used and extended upward to the position of the mounting structure 3 to perform the mounting connection between the mounting structure 3 and the battery 30, the raised position of the tool is lower than the extension portion 2, which can reduce the lifting height required for the tool. Moreover, the tool does not need to extend between the battery 30 and the extension portion 2, eliminating the need to increase the gap between the battery 30 and the extension portion 2 to accommodate the tool. This reduces space waste, allowing the saved space to be used to further increase the dimension of the battery 30, thereby increasing the volumetric energy density of the battery 30.

In some embodiments, referring to FIGs. 4 and 5, a length direction of the mounting edge 24 is the same as a width direction of the vehicle beam 20 (for example, second direction Y), and the mounting edge 24 is provided with a plurality of mounting structures 3 spaced apart along the length direction of the mounting edge 24.

Thus, since the length direction of the mounting edge 24 is the same as the width direction of the vehicle beam 20 (for example, second direction Y), this helps to reduce the processing difficulty of the mounting edge 24, allowing the mounting edge 24 to have a larger length dimension to accommodate a greater quantity of mounting structures 3. Arrangement of a plurality of mounting structures 3 spaced apart along the length direction of the mounting edge 24 helps to enhance the mounting stability of the battery 30 or helps to increase the quantity of batteries 30 mounted on the mounting edge 24.

In some embodiments, referring to FIG. 7, FIG. 7 is a partial enlarged view of a battery installation frame 10 according to another embodiment of this application, where a length direction of the mounting edge 24 is the same as the width direction of the vehicle beam 20 (for example, second direction Y), and the mounting structure 3 on the mounting edge 24 is configured as one and extends along the length direction of the mounting edge 24.

Thus, providing only one mounting structure 3 on the mounting edge 24 helps to reduce the processing difficulty of the mounting structure 3. Moreover, the mounting structure 3 extends along the length direction of the mounting edge 24, in other words, a length direction of the mounting structure 3 is consistent with the length direction of the mounting edge 24. As a result, the mounting structure 3 has a larger length dimension, a larger force-bearing area, or more connection positions, which facilitates simultaneous connection with a plurality of connection structures on the battery 30, improving the mounting reliability of the battery 30, or facilitates simultaneous mounting of a plurality of batteries 30.

In some embodiments, the extension portion 2 is arranged on one side of the vehicle beam 20 in a width direction of the vehicle beam 20 (for example, second direction Y). It is worth noting that the width direction of the vehicle beam 20 (for example, second direction Y) is consistent with the width direction of the vehicle 1000, such as the left-right direction of the vehicle 1000. For example, the extension portion 2 is provided on the left side of the vehicle beam 20, or the extension portion 2 is provided on the right side of the vehicle beam 20.

Thus, arranging the extension portion 2 on only one side of the vehicle beam 20 in the width direction of the vehicle beam 20 (for example, second direction Y) can reduce the force transmitted from the extension portion 2 with the mounted battery 30 to the vehicle beam 20, improving the connection reliability between the extension portion 2 and the vehicle beam 20, thereby improving the mounting reliability of the battery 30.

In some embodiments, referring to FIGs. 3 and 4, the extension portion 2 is arranged on each of two sides of the vehicle beam 20 in a width direction of the vehicle beam 20 (for example, second direction Y), meaning that the vehicle beam 20 is provided with a plurality of extension portions 2, at least two of which are respectively located on two sides of the vehicle beam 20 in the width direction of the vehicle beam 20 (for example, second direction Y). It is worth noting that the width direction of the vehicle beam 20 (for example, second direction Y) is consistent with the width direction of the vehicle 1000, such as the left-right direction of the vehicle 1000. For example, the extension portion 2 is provided on the left side of the vehicle beam 20, or the extension portion 2 is provided on the right side of the vehicle beam 20.

Thus, the extension portions 2 are arranged on the two sides of the vehicle beam 20 in the width direction of the vehicle beam 20 (for example, second direction Y). This allows the extension portions 2 on the two sides of the vehicle beam 20 to be used for mounting batteries 30 respectively. For example, two parts of the same battery 30 located on the two sides of the vehicle beam 20 in the width direction of the vehicle beam 20 can be mounted, or two separate batteries 30 located on two sides of the vehicle beam 20 in the width direction of the vehicle beam 20 can be mounted, thereby increasing the mounting strength of the battery 30 or the quantity of mounted batteries 30.

In some embodiments, referring to FIGs. 3 and 4, the extension portion 2 includes a first extension portion 21 and a second extension portion 22 respectively arranged on the two sides of the vehicle beam 20 in a width direction of the vehicle beam 20 (for example, second direction Y), where the first extension portion 21 and the second extension portion 22 have the same extension direction, and projections of the first extension portion 21 and the second extension portion 22 along the extension direction of the first extension portion 21 overlap.

It is worth noting that the width direction of the vehicle beam 20 (for example, second direction Y) is consistent with the width direction of the vehicle 1000, such as the left-right direction of the vehicle 1000. For example, both the first extension portion 21 and the second extension portion 22 extend along the width direction of the vehicle beam 20 (for example, second direction Y), or both the first extension portion 21 and the second extension portion 22 extend along a direction inclined to the width direction of the vehicle beam 20, with the same inclination angle.

Thus, configuring the first extension portion 21 and the second extension portion 22 to have the same extension direction and their projections along the extension direction of the first extension portion 21 to overlap enables the first extension portion 21 and the second extension portion 22 to simultaneously mount two parts of the same battery 30 located on two sides of the vehicle beam 20 in the width direction of the vehicle beam 20. This allows the dimension of the battery 30 to be increased, reducing the quantity of batteries 30 and simplifying the battery swapping complexity.

In some embodiments, referring to FIGs. 3 and 4, when at least one side of the vehicle beam 20 in the width direction of the vehicle beam 20 (for example, second direction Y) is provided with a plurality of extension portions 2 spaced apart along the length direction of the vehicle beam 20 (for example, first direction X), the battery installation frame 10 further includes a reinforcing portion 5, the reinforcing portion 5 being configured to connect at least two extension portions 2 located on the same side of the vehicle beam 20 in the width direction of the vehicle beam 20 (for example, second direction Y). It is worth noting that this embodiment is applicable to both cases where "at least one extension portion 2 is arranged on each side of the vehicle beam 20 in the width direction of the vehicle beam 20" and where "an extension portion 2 is arranged on one side of the vehicle beam 20 in the width direction of the vehicle beam 20." Additionally, the at least two extension portions 2 connected by the reinforcing portion 5 may be adjacent or non-adjacent.

Furthermore, it is worth noting that the width direction of the vehicle beam 20 (for example, second direction Y) is consistent with the width direction of the vehicle 1000, such as the left-right direction of the vehicle 1000. For example, at least two extension portions 2 on the left side of the vehicle beam 20 are connected by the reinforcing portion 5, and/or at least two extension portions 2 on the right side of the vehicle beam 20 are connected by the reinforcing portion 5.

Thus, this arrangement helps to enhance the overall structural strength of the battery installation frame 10, alleviate deformation of the extension portions 2 caused by stress, and improve the mounting reliability of the battery 30.

In some embodiments, the reinforcing portion 5 and the main body portion 1 are disposed on opposite sides of the extension portion 2 in the width direction of the vehicle beam 20 (for example, second direction Y). Thus, the two extension portions 2 defining the battery mounting space 4 can be connected at two ends in the width direction of the vehicle beam 20 (for example, second direction Y) through the main body portion 1 and the reinforcing portion 5, respectively. This forms a ring-shaped structure around the battery mounting space 4, which has higher structural strength and greater reliability for mounting the battery 30, and provides more comprehensive protection to the battery 30 from all sides, while allowing flexible positioning of the mounting structure 3.

In some embodiments, referring to FIG. 5, a height of the extension portion 2 in a height direction of the vehicle beam 20 (for example, third direction Z) tends to decrease in a direction away from the vehicle beam 20. It is worth noting that "tends to decrease" may refer to a gradual decrease or a stepwise decrease.

Thus, configuring the height of the extension portion 2 to tend to decrease in a direction away from the vehicle beam 20 results in a smaller height in the region of the extension portion 2 away from the vehicle beam 20. In other words, the height of the end of the extension portion 2 connected to the vehicle beam 20 is relatively large, while the height of the end away from the vehicle beam 20 is relatively small, which can enhance the connection strength between the extension portion 2 and the vehicle beam 20, improve the reliability of the extension portion 2 in mounting the battery 30, and reduce the weight of the extension portion 2, thereby reducing the load of the vehicle 1000.

When the mounting structure 3 is located at a lower edge of the extension portion 2 in the height direction of the vehicle beam 20 (for example, third direction Z), for example, on the mounting edge 24, and the mounting edge 24 is located at the lower edge of the extension portion 2, the lower edge of the extension portion 2 can be configured to extend horizontally, while an upper edge of the extension portion 2 in the height direction of the vehicle beam 20 (for example, third direction Z) tends to decrease in a direction away from the vehicle beam 20. It is worth noting that "decreases" may refer to a gradual decrease or a stepwise decrease. This helps to ensure that the mounting structures 3 are all located at the same horizontal height, and facilitates the operations of mounting the battery 30.

In some embodiments, as shown in FIG. 7, the extension portion 2 is provided with reinforcing ribs 25. The structural form of the reinforcing rib 25 is not limited and may be, for example, linear, curved, or cross-shaped. Thus, providing the reinforcing ribs 25 helps to enhance the structural strength of the extension portion 2 and alleviate the problem of deformation caused by stress on the extension portion 2.

For example, typically, the extension portion 2 that is farther from the main body portion 1 is more prone to deformation. At least some of the reinforcing ribs 25 can be arranged close to a middle of the extension portion 2 in a width direction of the vehicle beam 20 (for example, second direction Y), that is, generally centered or substantially centered, for example, within a range between 1/3 and 2/3 of the width direction of the extension portion 2 in the vehicle beam 20 (for example, second direction Y). This can effectively enhance the structural strength of the extension portion 2 with a reduced quantity of reinforcing ribs 25, and improve the reliability of the extension portion 2 in mounting the battery 30.

For example, when the battery 30 is mounted on the mounting structure 3 of the extension portion 2, the position of the mounting structure 3 on the extension portion 2 is subject to concentrated stress and is prone to deformation or damage. Therefore, at least some of the reinforcing ribs 25 can be arranged corresponding to the mounting structure 3 in the height direction of the vehicle beam 20 (for example, third direction Z), which can effectively enhance the structural strength of the extension portion 2 with a reduced quantity of reinforcing ribs 25, and improve the reliability of the extension portion 2 in mounting the battery 30.

For example, when the extension portion 2 is provided with a plurality of mounting structures 3, at least some of the reinforcing ribs 25 are arranged corresponding to a position between two adjacent mounting structures 3 along the height direction of the vehicle beam 20 (for example, third direction Z). When the battery 30 is mounted on the mounting structure 3 of the extension portion 2, the position of the mounting structure 3 between the two adjacent mounting structures 3 is subject to concentrated stress and is prone to deformation or damage. Arranging at least some of the reinforcing ribs 25 corresponding to a position between two adjacent mounting structures 3 can enhance the structural strength of the extension portion 2 between the two adjacent mounting structures 3, alleviate problems of fracture caused by stress concentration between the two adjacent mounting structures 3, and improve the reliability of the extension portion 2 in mounting the battery 30.

In some embodiments, referring to FIG. 5, the extension portion 2 is provided with a first weight-reducing structure 26. For example, the first weight-reducing structure 26 may include, but is not limited to, weight-reducing holes, weight-reducing slots, or thinning treatments.

Thus, providing the first weight-reducing structure 26 helps to reduce the weight of the extension portion 2, and facilitates a lightweight design of the battery installation frame 10.

In some embodiments, the extension portion 2 is entirely located on one side of the vehicle beam 20 in a width direction of the vehicle beam 20 (for example, second direction Y), and the frame assembly 100 further includes a main body portion 1, where the main body portion 1 is connected to the vehicle beam 20, and the extension portion 2 is connected to the main body portion 1.

Thus, providing the main body portion 1 enables the extension portion 2 to be connected to the vehicle beam 20 via the main body portion 1, which helps to reduce the difficulty in arranging the extension portion 2. Additionally, arranging the extension portion 2 on one side of the vehicle beam 20 in the width direction of the vehicle beam 20 (for example, second direction Y) can fully utilize the space in the width direction of the vehicle beam 20 to mount the battery 30, helping to increase the dimension of the battery 30. Furthermore, when a plurality of extension portions 2 are provided, for example, a plurality of extension portions 2 can first be arranged on the main body portion 1, and then the main body portion 1 can be connected to the vehicle beam 20, simplifying assembly steps and reducing assembly difficulty. When arranging extension portions 2 on vehicle beams 20 of different dimensions, only the main body portion 1 needs to be adjusted, improving the adaptability of the extension portion 2.

The main body portion 1 may be integrally formed with the extension portion 2, facilitating simplified production steps and reducing production costs. Alternatively, the main body portion 1 and the extension portion 2 may be formed separately and assembled together, for example, through welding or screw connections, reducing the processing difficulty of each component.

In some embodiments, the main body portion 1 spans the vehicle beam 20, such that the extension portions 2 are respectively connected to two sides of the main body portion 1 in the width direction of the vehicle beam 20 (for example, second direction Y). "The main body portion 1 spans the vehicle beam 20" includes, but is not limited to, the main body portion 1 extending across the width direction of the vehicle beam 20 or extending across a direction intersecting the width direction of the vehicle beam 20.

Thus, configuring the main body portion 1 to span the vehicle beam 20 enables the main body portion 1 to simultaneously connect extension portions 2 on the two sides of the vehicle beam 20 in the width direction of the vehicle beam 20, which further improves the assembly efficiency between the battery installation frame 10 and the vehicle beam 20, and helps to enhance the overall structural strength of the battery installation frame 10. Additionally, since the extension portions 2 are provided on two sides of the vehicle beam 20 to mount batteries 30, the space on the two sides of the vehicle beam 20 in the width direction of the vehicle beam 20 can be fully utilized to mount batteries 30, which helps to increase the dimension of the battery 30 and the quantity of batteries 30, thereby increasing the driving range of the vehicle 1000 per battery swap.

According to a fourth aspect, this application provides a vehicle 1000, including a battery 30 and the frame assembly 100 according to any one of the above embodiments, where the battery 30 is installed to the frame assembly 100. Thus, providing the frame assembly 100 according to the embodiments of this application can increase in the dimension of the battery 30 and the quantity of batteries 30, thereby helping to increase the driving range of the vehicle 1000 per battery swap.

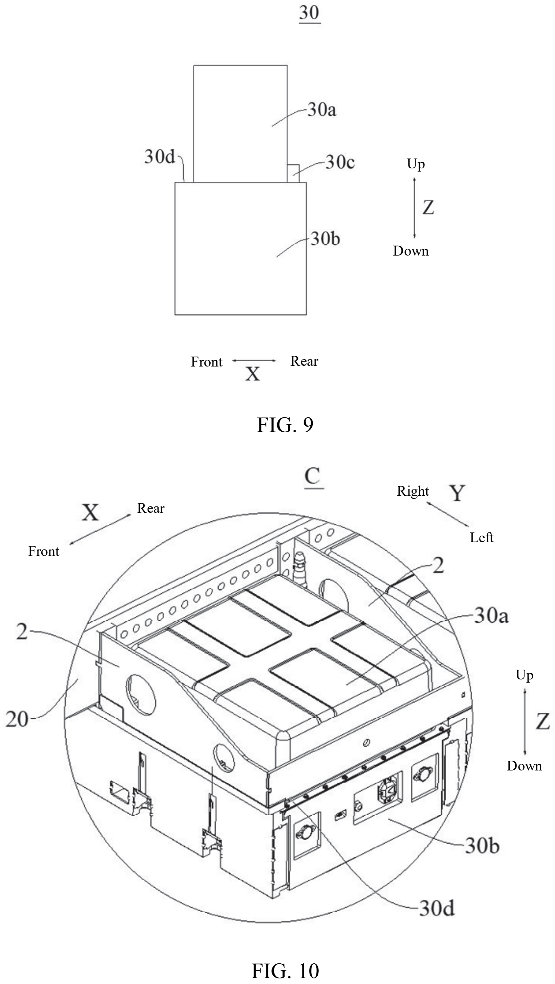

In some embodiments, referring to FIGs. 9 and 10, the battery 30 includes a battery upper portion 30a and a battery lower portion 30b, where the battery upper portion 30a is higher than a bottom surface of the vehicle beam 20, and the battery lower portion 30b is lower than the bottom surface of the vehicle beam 20. Thus, the battery upper portion 30a can occupy the space on the two sides of the vehicle beam 20 in the width direction of the vehicle beam 20, which improves space utilization. This allows a dimension of the battery 30 in a height direction of the vehicle 1000 to be increased, thereby increasing the energy density of the battery 30. Additionally, detachably connecting the installation structure 30c to the mounting structure 3 helps to reduce the difficulty of replacing of the battery 30, improving swapping efficiency.

Further, in some embodiments, referring to FIGs. 9 and 10, the extension portion 2 may be higher than the bottom surface of the vehicle beam 20, the mounting structure 3 is disposed at a lower edge of the extension portion 2, the battery 30 is provided with an installation structure 30c at a position between the battery upper portion 30a and the battery lower portion 30b, and the installation structure 30c is detachably connected to the mounting structure 3. Thus, when mounting the battery 30 on the battery installation frame 10, the battery upper portion 30a can extend into the battery mounting space 4, and the battery lower portion 30b is located below the battery mounting space 4, allowing the extension portion 2 to provide a certain degree of protection to the battery upper portion 30a, helping to reduce the risk of damage to the battery 30 and prolong the service life of the battery 30. Additionally, the height of the extension portion 2 can be less than the height of the battery 30, which can reduce the height of the extension portion 2, thereby reducing the weight and cost of the battery installation frame 10. Moreover, positioning the installation structure 30c at the position between the battery upper portion 30a and the battery lower portion 30b enables the mounting structure 3 at the lower edge of the extension portion 2 to connect to the installation structure 30c, facilitating swapping operations.

The connection method between the installation structure 30c and the mounting structure 3 includes, but is not limited to, bolting, snapping, plugging, or magnetic attachment.

In some embodiments, referring to FIGs. 9 and 10, in a length direction of the vehicle beam 20 (for example, first direction X), a dimension of the battery upper portion 30a is smaller than a dimension of the battery lower portion 30b, to form a stepped surface 30d between the battery upper portion 30a and the battery lower portion 30b, the stepped surface 30d abutting against a bottom of the extension portion 2.

It is worth noting that the stepped surface 30d abutting against the bottom of the extension portion 2 should be understood broadly, meaning that the stepped surface 30d may be in direct contact with the extension portion 2 to achieve an abutting effect, or may be in indirect contact with the extension portion 2 to achieve the abutting effect. For example, the mounting structure 3 may be provided at a lower position of the extension portion 2, while the installation structure 30c is provided on the stepped surface 30d, such that when the installation structure 30c is connected to the mounting structure 3, the stepped surface 30d abuts against the bottom of the extension portion 2.

Thus, during actual installation of the battery 30, when the battery upper portion 30a is installed from bottom to top, the abutment between the bottom of the extension portion 2 and the stepped surface 30d can be used to provide a prompt indicating that the battery 30 is properly assembled. This prevents the problems of the battery 30 being excessively squeezed upward, which could cause it to hit the vehicle underbody, thereby protecting the battery 30. Additionally, configuring the dimension of the battery lower portion 30b to be larger than the dimension of the battery upper portion 30a can further increase the dimension of the battery 30 to some extent, thereby increasing the volumetric energy density of the battery 30.

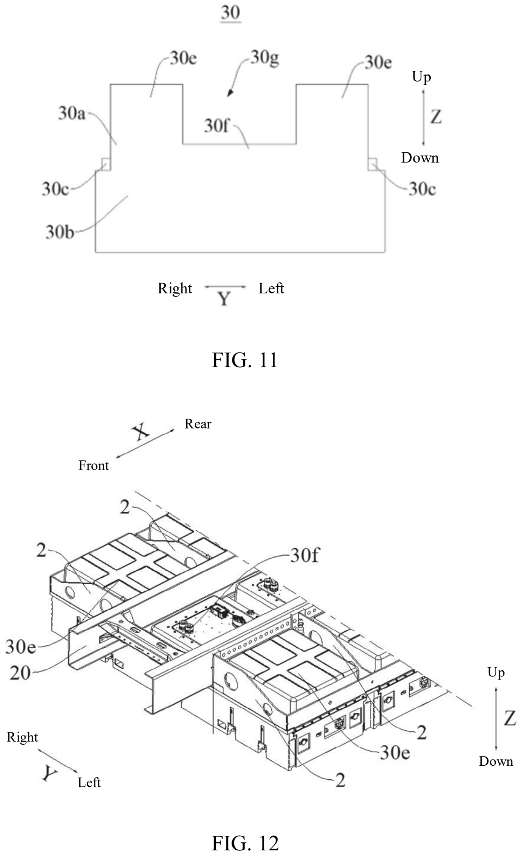

In some embodiments, referring to FIGs. 11 and 12, the battery 30 includes two battery side portions 30e and a battery central portion 30f, where, in a width direction of the vehicle beam 20 (for example, second direction Y), the two battery side portions 30e are respectively located on two sides of the battery central portion 30f, a top surface of the battery central portion 30f is lower than a top surface of the battery side portions 30e, to form an avoidance groove 30g, between the two battery side portions 30e and the battery central portion 30f, that extends along a length direction of the vehicle beam 20 (for example, first direction X) and has an open top.

For example, a bottom surface of the battery central portion 30f is flush with a bottom surface of the battery side portions 30e, such that the overall bottom surface of the battery 30 is a flat structure, facilitating full utilization of space and simplifying the design of the ground clearance of the battery 30.

Thus, when the battery 30 is installed upward at the vehicle underbody, at least a portion of the vehicle beam 20 can be accommodated within the avoidance groove 30g and located above the battery central portion 30f, and upper portions of the two battery side portions 30e can be respectively located on two sides of the vehicle beam 20 in the width direction of the vehicle beam 20. This can fully utilize the space on two sides of the vehicle beam 20 in the width direction of the vehicle beam 20 to accommodate a larger-sized battery 30. Therefore, the structure of the battery 30 is ingeniously designed to avoid the vehicle beam 20, such that the spaces on the two sides of the vehicle beam 20 in the width direction of the vehicle beam 20 are fully utilized, which allows the overall dimension of the battery 30 to be increased, thereby increasing the volumetric energy density of the battery 30.

In some embodiments, referring to FIGs. 11 and 12, at least one of the battery side portion 30e and the battery central portion 30f is detachably connected to the mounting structure 3. Herein, "at least one of the battery side portion 30e and the battery central portion 30f is detachably connected to the mounting structure 3" includes: the battery side portion 30e being detachably connected to the mounting structure 3, the battery central portion 30f being detachably connected to the mounting structure 3, or both the battery side portion 30e and the battery central portion 30f being respectively detachably connected to corresponding mounting structures 3.

The detachable connection between the battery side portion 30e and the mounting structure 3 may be achieved through an installation structure 30c on the battery side portion 30e, and the position of the installation structure 30c on the battery side portion 30e is not limited, for example, it may be located at the middle, upper part, or lower part of the battery side portion 30e.

The detachable connection between the battery central portion 30f and the mounting structure 3 may be achieved through an installation structure 30c on the battery central portion 30f, and the position of the installation structure 30c on the battery central portion 30f is not limited, for example, it may be located at the middle, upper part, or lower part of the battery central portion 30f.

The connection method between the battery side portion 30e and/or the battery central portion 30f and the mounting structure 3 through the installation structure 30c includes, but is not limited to, bolting, snapping, plugging, or magnetic attachment.

When the two battery side portions 30e are both connected to the mounting structure 3, or when the battery side portion 30e and the battery central portion 30f are both connected to the mounting structure 3, the installation stability of the battery 30 can be improved. Additionally, at least one of the battery side portion 30e and the battery central portion 30f is detachably connected to the mounting structure 3, which helps to improve the design flexibility of the battery 30.

It is worth noting that the form of the battery 30 in the embodiments of this application is not limited thereto. For example, the battery 30 may include only one battery side portion 30e, or include both a battery central portion 30f and one battery side portion 30e.

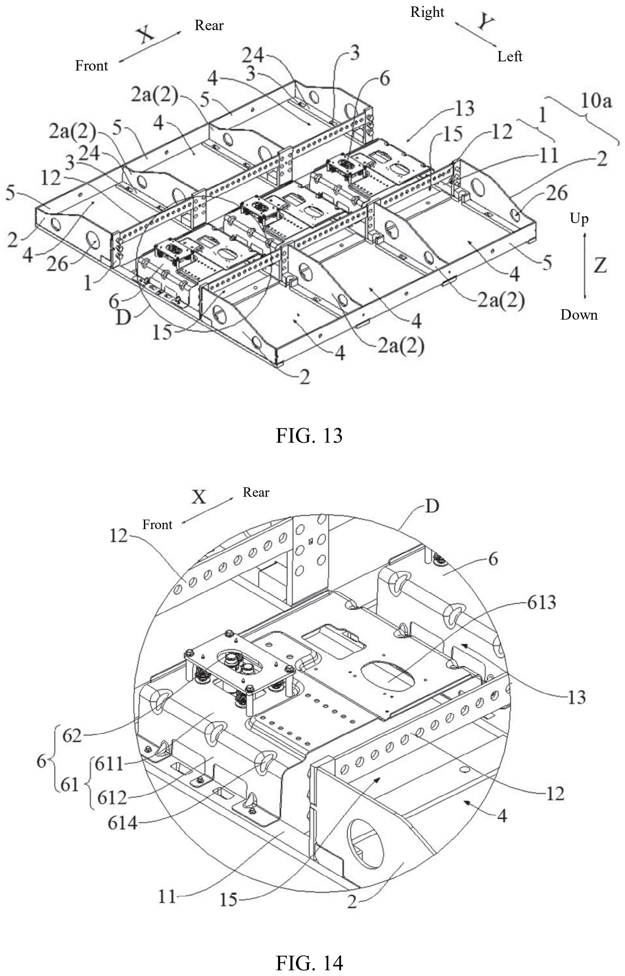

In some embodiments of this application, as shown in FIGs. 13 and 14, the battery installation frame 10 according to any one of the above embodiments of this application may further include a docking structure 6, where the docking structure 6 is configured to connect a vehicle body of the vehicle 100 and dock with the battery 30, such that the battery 30 and the vehicle body form an electrical and/or fluid connection.

When the battery 30 is mounted on the frame body 10a via the mounting structure 3, the battery 30 can dock with the docking structure 6 to form an electrical and/or fluid connection, and the docking structure 6 is also connected to the vehicle body, forming an electrical and/or fluid connection as well. This enables the battery 30 to meet the requirements of electrical and/or fluid connection to the vehicle body through docking with the docking structure 6.

It is worth noting that the connection method between the docking structure 6 and the vehicle body is not limited and may include, for example, connection through docking terminals or connection through plugging electrical wires and/or pipelines. Additionally, the entirety of the vehicle 1000, excluding the battery 30 and the battery installation frame 10, can be understood as the vehicle body, with the vehicle beam 20 being a part of the vehicle body.

For example, when the docking structure 6 is configured to achieve an electrical connection, it can facilitate current transmission between the vehicle 1000 and the battery 30, enabling the battery 30 to supply power to the vehicle 1000, the vehicle 1000 to control the battery 30, and the like. For example, when the docking structure 6 is configured to achieve a fluid connection, it can facilitate heat transfer between a thermal management system of the vehicle 1000 and the battery 30, allowing the thermal management system to regulate the temperature of the battery 30 to enhance the operational reliability and safety of the battery 30, allowing the thermal management system to absorb residual heat from the battery 30 to meet the heat source requirements of a heat pump air conditioning system of the vehicle 1000, or the like, which will not be elaborated herein.

Thus, providing the docking structure 6 on the battery installation frame 10 allows the structural design of the battery installation frame 10 to meet the requirements of electrical and/or fluid connection between the battery 30 and the vehicle body, thereby simplifying the structural design of the vehicle body and the battery 30. It should be noted that the position of the docking structure 6 is not limited and can be specifically selected based on the form of the battery installation frame 10.

In some embodiments, as shown in FIG. 13, the docking structure 6 may be disposed on the main body portion 1, the mounting structure 3 may be disposed on the extension portion 2, and the main body portion 1 and the extension portion 2 are connected to form the frame body 10a, indicating that both the docking structure 6 and the mounting structure 3 are integrated on the frame body 10a. Thus, when using such a battery installation frame 10 to install the battery 30 to the vehicle body, the mounting structure 3 integrated on the frame body 10a can be used to mount and install the battery 30, and the docking structure 6 integrated on the frame body 10a can be used to achieve the electrical and/or fluid connection between the battery 30 and the vehicle body, eliminating the need to connect electrical wires and pipelines, simplifying the complex battery swapping operation, and improving swapping efficiency. Moreover, since both the mounting structure 3 and the docking structure 6 are integrated on the frame body 10a, the reference datum for the mounting and connection position and reference datum for the electrical/fluid docking position of the battery 30 are consistent, meaning that the reference datums are the frame body 10a, which can improve the battery swapping success rate.

In some embodiments, the docking structure 6 may include a first docking structure and a second docking structure, where the first docking structure is configured to dock with an electrical terminal on the battery 30, and the second docking structure is configured to dock with a fluid port on the battery 30. The relative positions of the first docking structure and the second docking structure are not limited and may be, for example, spaced apart in a horizontal direction, such as a left-right direction or a front-rear direction, such that the first docking structure and the second docking structure do not interfere with each other during docking. Of course, the first docking structure and the second docking structure mentioned above are merely examples of parts of the docking structure 6 and do not represent a limitation thereto.

In some embodiments, as shown in FIGs. 13 and 14, the main body portion 1 includes a beam avoidance groove 13, where the beam avoidance groove 13 has an opening running through along a length direction of the vehicle beam 20 (for example, first direction X), and the docking structure 6 is located within the beam avoidance groove 13. In the embodiments of this application, the length direction of the vehicle body, the length direction of the vehicle 1000, and the length direction of the vehicle beam 20 are consistent; the width direction of the vehicle body, the width direction of the vehicle 1000, and the width direction of the vehicle beam 20 are consistent; and the height direction of the vehicle body, the height direction of the vehicle 1000, and the height direction of the vehicle beam 20 are consistent.

Thus, providing the beam avoidance groove 13 on the main body portion 1 allows at least a portion of the vehicle beam 20 to extend into the beam avoidance groove 13 when the main body portion 1 is connected to the vehicle body, with the extension direction of the vehicle beam 20 being the same as the running-through direction of the opening, avoiding interference between the battery installation frame 10 and the vehicle beam 20, improving the compactness of coordination between the battery installation frame 10 and the vehicle beam 20, and facilitating the use of space close to the vehicle beam 20 to arrange the battery 30, thereby increasing the dimension and volumetric energy density of the battery 30. Additionally, disposing the docking structure 6 within the beam avoidance groove 13 can fully utilize the space within the beam avoidance groove 13, improving space utilization and reducing the space occupied by the docking structure 6 in other positions of the battery installation frame 10, thereby increasing the dimension and volumetric energy density of the battery 30.

Moreover, the docking structure 6 can be protected by the inner wall of the beam avoidance groove 13, reducing the probability of the docking structure 6 being damaged by collisions, alleviating the problem of corrosion failure of the docking structure 6 caused by mud or water, improving the reliability and stability of docking, and reducing the risk of electrical faults in the docking structure 6 due to mud or water splash erosion. Furthermore, the docking structure 6 does not need to occupy space outside the vehicle beam 20, avoiding interference with the coordination between the battery installation frame 10 and the vehicle beam 20 or the battery 30. Additionally, it helps to shorten a distance between the vehicle body and the docking structure 6, thereby reducing the difficulty of connecting the vehicle body to the docking structure 6.

In some embodiments, as shown in FIGs. 13 and 14, the main body portion 1 includes a plurality of first main walls 11 spaced apart along the length direction of the vehicle beam 20 (for example, first direction X), an avoidance opening 15 is formed between two adjacent first main walls 11, and a docking interface of the docking structure 6 (for example, an electrical interface and/or a fluid interface) is higher than the first main walls 11 and is disposed corresponding to the avoidance opening 15. Herein, the height direction of the vehicle body is defined as the up-down direction, and the height direction of the vehicle body is consistent with the height direction of the vehicle 1000, that is, the gravitational direction.

Thus, since the docking interface of the docking structure 6 is higher than the first main walls 11, the docking interface of the docking structure 6 has a greater ground clearance, providing better protection. Moreover, the height setting of the docking interface of the docking structure 6 helps to save space to increase the height dimension of the battery 30, improves the compactness of coordination between the battery installation frame 10 and the battery 30, fully utilizes the space, and increases the dimension and volumetric energy density of the battery 30. Additionally, providing the avoidance opening 15 allows a portion of the battery 30 to extend upward into the avoidance opening 15 and dock with the docking interface of the docking structure 6 when the battery 30 is mounted on the battery installation frame 10, thereby meeting docking requirements.

In some embodiments, as shown in FIGs. 13 and 14, the docking structure 6 includes a bearing frame 61 and a docking apparatus 62, where the bearing frame 61 includes a bearing portion 611 and leg portions 612, the docking apparatus 62 is disposed on the bearing portion 611, and the leg portions 612 extend from two ends of the bearing portion 611 in the length direction of the vehicle beam 20 (for example, first direction X) toward the first main wall 11 and are connected to the first main wall 11.

In the above technical solution, the docking apparatus 62 is disposed on the bearing portion 611, and the leg portions 612 are configured to extend from two ends of the bearing portion 611 in the length direction of the vehicle beam 20 (for example, first direction X) toward the first main body portion 1 and connect to the first main wall 11. This allows the bearing portion 611 to be spaced apart from the first main wall 11. In this way, the bearing frame 61 can be constructed in a shape that can upwardly avoid the battery 30 and help to increase the setting height of the docking apparatus 62, thereby saving space to increase the height dimension of the battery 30.

Furthermore, when the length direction of the vehicle beam 20 (for example, first direction X) is the length direction of the vehicle 1000, disposing the two leg portions 612 on two sides of the bearing portion 611 in the length direction of the vehicle beam 20 (for example, first direction X) can occupy only the space of the battery 30 in the length direction of the vehicle 1000. Since the space in this direction is relatively ample, it can reduce the space of the battery 30 occupied in the width direction of the vehicle 1000, thereby helping to increase the dimension and energy density of the battery 30 in the width direction of the vehicle 1000.

In some embodiments, as shown in FIGs. 13 and 14, the bearing portion 611 has a third weight-reducing structure 613, and/or a first reinforcing structure 614 is provided at the connection between the leg portions 612 and the bearing portion 611.

Thus, providing the third weight-reducing structure 613 on the bearing portion 611 helps to reduce the weight of the bearing portion 611, thereby reducing the weight of the docking structure 6, and facilitating a lightweight design of the docking structure 6. The third weight-reducing structure 613 may include, but is not limited to, weight-reducing holes, weight-reducing slots, or thinning treatments.

Thus, providing the first reinforcing structure 614 at the connection between the bearing portion 611 and the leg portions 612 helps to enhance the structural strength at the connection between the bearing portion 611 and the leg portions 612, reducing the probability of fracture at the connection between the leg portions 612 and the bearing portion 611, thereby facilitating a reduction in the thickness of the bearing portion 611 and the leg portions 612, and achieving a lightweight design of the docking structure 6. The first reinforcing structure 614 may include, but is not limited to, reinforcing ribs, strip-like reinforcing protrusions, or localized thickening of the extension portion 2, and when the first reinforcing structure 614 is configured as reinforcing ribs, the structural form of the reinforcing ribs is not limited and may be, for example, linear, curved, or cross-shaped.

In some embodiments, as shown in FIGs. 13 and 14, the bearing frame 61 is an integrally formed piece and is assembled and connected to the first main wall 11. Thus, configuring the bearing frame 61 as an integrally formed piece helps to reduce the difficulty of setting up the bearing frame 61 and helps to ensure the overall structural strength of the bearing frame 61. Additionally, the assembly connection between the bearing frame 61 and the first main wall 11 helps to reduce the difficulty of assembling and disassembling the bearing frame 61 and the first main wall 11, improving the production efficiency of the battery installation frame 10.

The bearing frame 61 may alternatively not be an integrally formed piece. For example, the bearing portion 611 and the leg portion 612 may be assembled and connected. "Assembled connection" includes, but is not limited to, welding, bolting, snapping, or plugging.

In some embodiments, as shown in FIGs. 13 and 14, the battery mounting space 4 and the avoidance opening 15 may both be configured as a plurality spaced apart along the length direction of the vehicle beam 20 (for example, first direction X), with the avoidance openings 15 being in a one-to-one correspondence with the battery mounting spaces 4 along the width direction of the vehicle beam 20 (for example, second direction Y), each avoidance opening 15 being provided with a corresponding docking structure 6. In this way, when the battery 30 is large in dimension, the portion of the battery 30 corresponding to the battery mounting space 4 can extend into the battery mounting space 4, and the portion corresponding to the avoidance opening 15 can extend into the avoidance opening 15 to dock with the docking structure 6. Moreover, providing a plurality of avoidance openings 15 allows a plurality of docking structures 6 to respectively achieve the electrical and/or fluid connection requirements of a plurality of batteries 30 with the vehicle body when the plurality of batteries 30 are mounted on the battery installation frame 10, meaning that each battery 30 can meet the electrical and/or fluid connection requirements with the vehicle body through the docking of the corresponding docking structure 6. This allows the vehicle 1000 to achieve independent connections with each battery 30 through the corresponding docking structures 6, facilitating independent power supply operations or individual control of each battery 30 by the vehicle body.

In some embodiments, referring to FIG. 4, when a plurality of battery mounting spaces 4 spaced apart along the length direction of the vehicle beam 20 (for example, first direction X) is provided on one side of the first main body portion 1, the docking structure 6 may be configured as a plurality spaced apart along the length direction of the vehicle beam 20 (for example, first direction X), and the plurality of docking structures 6 are arranged opposite the plurality of battery mounting spaces 4 along a second direction Y, where second direction Y intersects the length direction of the vehicle beam 20 (for example, first direction X) (for example, at an acute angle, an obtuse angle, or a right angle).

In this way, when the battery 30 is large in dimension, the portion of the battery 30 corresponding to the battery mounting space 4 can extend into the battery mounting space 4, and the portion corresponding to the docking structure 6 can dock with the docking structure 6. The distribution direction of the docking structures 6 does not occupy space of the battery mounting spaces 4 in the length direction of the vehicle beam 20 (for example, first direction X), meaning the docking structures 6 do not occupy space in the arrangement direction of the plurality of battery mounting spaces 4 while achieving docking with the battery 30, helping to increase the quantity or dimension of battery mounting spaces 4 arranged along the length direction of the vehicle beam 20 (for example, first direction X), improving space utilization, and enabling the battery installation frame 10 to mount a greater quantity or larger-sized batteries 30.

It is worth noting that the specific composition of the vehicle beam 20 according to the embodiments of this application is not limited. For example, the vehicle beam 20 may include two longitudinal beams 201 extending along the length direction of the vehicle beam 20 and at least one cross beam 202 extending along the width direction of the vehicle, with the two longitudinal beams 201 spaced apart along the width direction of the vehicle, and the cross beam 202 connecting the two longitudinal beams 201. Since the vehicle beam 20 includes two longitudinal beams 201 extending along the length direction of the vehicle beam 20 (for example, first direction X) and spaced apart along the second direction Y, the second direction Y may be set to be orthogonal to the length direction of the vehicle beam 20 (for example, first direction X).

In some embodiments, when the vehicle beam 20 includes two longitudinal beams 201 extending along the length direction of the vehicle beam 20 and spaced apart along the width direction of the vehicle beam 20, the docking structure 6 may be disposed between the two longitudinal beams 201, allowing the two longitudinal beams 201 to provide a certain degree of protection to the docking structure 6, reducing damage to the docking structure 6, and prolonging the service life of the docking structure 6. Additionally, the docking structure 6 can fully utilize the space between the two longitudinal beams 201 to improve space utilization and reduce the volume of the battery installation frame 10, thereby increasing the capacity of the battery 30. Moreover, the portion of the docking structure 6 located between the two longitudinal beams 201 can be protected by the two longitudinal beams 201, reducing the probability of the docking structure 6 being damaged by collisions, alleviating the problem of corrosion failure of the docking structure 6 caused by mud or water, improving the reliability and stability of docking, and reducing the risk of electrical faults in the docking structure 6 due to mud or water splash erosion. Furthermore, the docking structure 6 does not need to occupy space outside the vehicle beam 20, avoiding interference with the coordination between the battery installation frame 10 and the vehicle beam 20 or the battery 30.

In some embodiments, as shown in FIGs. 13 and 14, the docking interface of the docking structure 6 is higher than the bottom surface of the longitudinal beams 201 and is disposed downward. Thus, since the docking interface of the docking structure 6 is higher than the bottom surface of the longitudinal beams 201, the docking interface has a greater ground clearance, providing better protection. Moreover, the height setting of the docking interface helps to save space to increase the height dimension of the battery 30, allowing at least a portion of the battery 30 to extend between the two longitudinal beams 201, improving the compactness of coordination between the battery installation frame 10 and the battery 30, fully utilizing space, and increasing the dimension and volumetric energy density of the battery 30. Additionally, configuring the docking interface to face downward enables the battery 30 to achieve docking with the docking structure 6 while the battery 30 is mounted from bottom to top, thereby improving swapping efficiency.

This allows the docking direction of the battery 30 with the vehicle 1000 to be arranged along the height direction of the vehicle 1000, and since the swapping movement direction of the battery 30 when mounted to the vehicle 1000 is also along the height direction of the vehicle 1000, the docking direction of the battery 30 can overlap with the swapping movement direction, eliminating the need for additional docking space in the length or width direction of the vehicle 1000, improving space utilization, and allowing the mounting and docking of the battery 30 to be performed in the same direction, thereby improving swapping efficiency.

In some embodiments, as shown in FIGs. 13 and 14, the docking interface of the docking structure 6 is higher than the bottom surface of the longitudinal beams 201 and is disposed downward. Thus, since the docking interface of the docking structure 6 is higher than the bottom surface of the longitudinal beams 201, the docking interface has a greater ground clearance, providing better protection. Moreover, the height setting of the docking interface helps to save space to increase the height dimension of the battery 30, allowing at least a portion of the battery 30 to extend between the two longitudinal beams 201, improving the compactness of coordination between the battery installation frame 10 and the battery 30, fully utilizing space, and increasing the dimension and volumetric energy density of the battery 30. Additionally, configuring the docking interface to face downward enables the battery 30 to achieve docking with the docking structure 6 while the battery 30 is mounted from bottom to top, thereby improving swapping efficiency.

This allows the docking direction of the battery 30 with the vehicle 1000 to be arranged along the height direction of the vehicle 1000, and since the swapping movement direction of the battery 30 when mounted to the vehicle 1000 is also along the height direction of the vehicle 1000, the docking direction of the battery 30 can overlap with the swapping movement direction, eliminating the need for additional docking space in the length or width direction of the vehicle 1000, improving space utilization, and allowing the mounting and docking of the battery 30 to be performed in the same direction, thereby improving swapping efficiency.

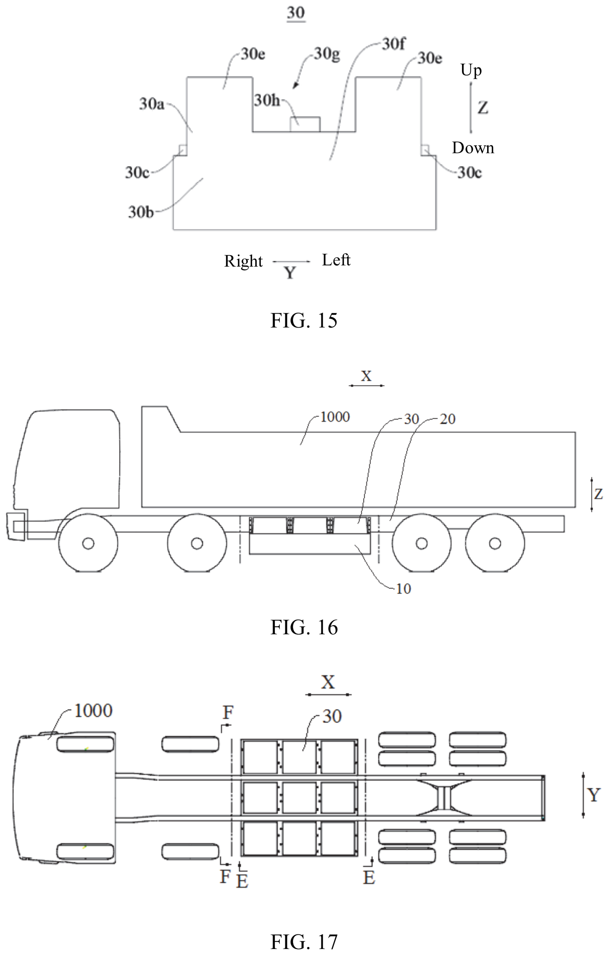

In some embodiments, as shown in FIG. 15, the battery 30 includes two battery side portions 30e and a battery central portion 30f, where in a width direction of the vehicle beam 20 (for example, second direction Y), the two battery side portions 30e are respectively located on two sides of the battery central portion 30f, a top surface of the battery central portion 30f is lower than a top surface of the battery side portions 30e, to form an avoidance groove 30g, between the two battery side portions 30e and the battery central portion 30f, that extends along a length direction of the vehicle beam 20 (for example, first direction X) and has an open top. In this case, the top of the battery central portion 30f may be provided with a docking portion 30h for docking with the docking structure 6.

Thus, when the battery 30 moves from bottom to top along the height direction of the vehicle 1000, the docking portion 30h of the battery 30 can easily dock with the docking structure 6 located between the two longitudinal beams 201, which helps to reduce swapping operation difficulty, improving swapping efficiency, and saving space required for swapping operations. Furthermore, when the docking interface of the docking structure 6 is disposed downward, the battery 30 can simultaneously achieve docking with the docking structure 6 while the battery 30 is mounted to the mounting structure 3 from bottom to top. In this way, the docking space for the battery 30 to dock with the vehicle 1000 is arranged along the height direction of the vehicle 1000, and since the swapping movement space of the battery 30 when mounted to the vehicle 1000 is also along the height direction of the vehicle 1000, the docking direction of the battery 30 can overlap with the swapping movement direction, eliminating the need for additional docking space in the length or width direction of the vehicle 1000, improving space utilization, and allowing the battery 30 swapping and battery 30 docking to be performed synchronously, thereby improving swapping efficiency.

In recent years, in application scenarios such as logistics, docks, and mines, battery swapping has become an important method for replenishing energy for pure electric commercial vehicles, and the construction of battery swapping stations has been accelerating. To ensure universal interchangeability in battery swapping, the battery swapping facilities such as swapping stations and charging equipment can be fully utilized to reduce resource waste.

This application proposes some embodiments related to battery swapping under frame to improve compatibility and interchangeability. However, the following embodiments are not limited to battery electric vehicles, and other types of swapping vehicles may also reference these embodiments.

In some embodiments, the operating voltage range of the swappable battery system is 400 V to 750 V.

In some embodiments, the flatness of the swapping contact surface of the swappable battery system is ≤4 mm. Specifically, the contact interface between the swappable battery system and the battery installation frame should be a plane without protruding structures, with a flatness of less than 4 mm.

In some embodiments, the dimensional tolerance of the swappable battery system is within ±10 mm.

In some embodiments, in the swappable battery system, the vehicle weight M1 and the battery capacity Q satisfy: 0 kg < M1 ≤ 1400 kg, 100 kWh ≤ Q ≤ 200 kWh; or 1400 kg < M1 ≤ 2800 kg, 200 kWh < Q ≤ 400 kWh; or 2800 kg < M1 ≤ 4200 kg, 400 kWh < Q ≤ 600 kWh; or 4200 kg < M1 ≤ 5600 kg, 600 kWh < Q ≤ 800 kWh.

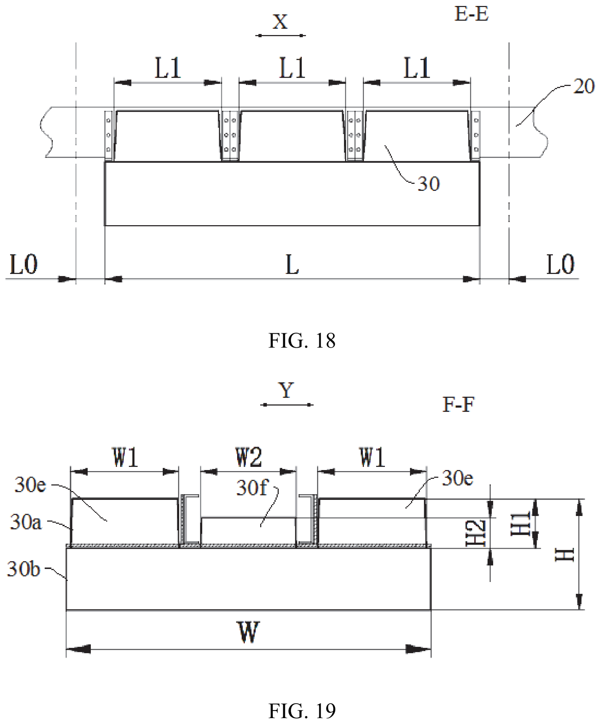

In some embodiments, as shown in FIGs. 16 and 17, the swappable battery system should be replaced on a vehicle within the corresponding envelope space, with the battery dimensions in the swappable battery system as indicated in FIGs. 18 and 19.

In some embodiments, referring to FIGs. 16 to 19, the front and rear end faces of the swappable battery system maintain a safety clearance LO with the vehicle, where LO ≥ 50 mm.

In some embodiments, referring to FIGs. 16 to 19, the dimension L of the swappable battery system along the length direction of the vehicle satisfies: 700 mm ≤ L ≤ 900 mm; or 1500 mm ≤ L ≤ 1700 mm; or 2300 mm ≤ L ≤ 2500 mm; or 3100 mm ≤ L ≤ 3300 mm.

In some embodiments, referring to FIGs. 16 to 19, the dimension W of the swappable battery system along the width direction of the vehicle satisfies: 2300 mm ≤ W ≤ 2550 mm.

In some embodiments, referring to FIGs. 16 to 19, the total height H of the swappable battery system satisfies: H ≤ 680 mm.

In some embodiments, referring to FIGs. 16 to 19, the length dimension L1 of the upper platform (for example, the battery upper portion 30a) of the swappable battery system satisfies: 600 mm ≤ L1 ≤ 700 mm.

In some embodiments, referring to FIGs. 16 to 19, the width dimension W1 of the upper side platforms (for example, the upper part of the battery side portion 30e) of the swappable battery system satisfies: W1 ≤ 805 mm.

In some embodiments, referring to FIGs. 16 to 19, the width dimension W2 of the upper middle platform (for example, the upper part of the battery central portion 30f) of the swappable battery system satisfies: W2 ≤ 640 mm.

In some embodiments, referring to FIGs. 16 to 19, the height dimension H1 of the upper side platforms (for example, the upper part of the battery side portion 30e) of the swappable battery system satisfies: H1 ≤ 300 mm.

In some embodiments, referring to FIGs. 16 to 19, the height dimension H2 of the upper middle platform (for example, the upper part of the battery central portion 30f) of the swappable battery system satisfies: H2 ≤ 150 mm.

The application scenarios for heavy-duty electric trucks currently include long-haul logistics, short- to medium-distance operations (for example, urban waste transport), and enclosed operation scenarios (for example, ports). The corresponding energy demands can be roughly divided into three categories: 400 kWh-600 kWh, 300 kWh-400 kWh, and 150 kWh-200 kWh. Based on this energy series, it can be seen that adopting a standard pack solution allows flexible configuration for different scenarios. For example, a standard swappable battery system with a capacity of approximately 150 kWh-200 kWh can use three standard swappable battery systems (referred to as triple-pack), two standard swappable battery systems (referred to as dual-pack), or a single standard swappable battery system (referred to as single-pack) to meet energy demands.

The main models of heavy-duty electric trucks currently include: 6*4 tractors, 4*2 tractors, 8*4 dump trucks, 6*4 dump trucks, 4*2 cargo trucks, and 6*4 cargo trucks, among which the 6*4 tractors and 8*4 dump trucks have relatively short wheelbases, while other models are compatible. For the 6*4 tractors, the traditional fuel vehicle wheelbase is 3300 mm, which is an ideal wheelbase but currently cannot accommodate large energy capacities. For rear-mounted swapping models, the wheelbase has been extended to 3800 mm, but this space still cannot accommodate the target energy capacity. Currently, efforts are being made to extend the wheelbase to 4200 mm, based on which the battery space is allocated. For the 8*4 dump truck, there are versions for urban use and mining areas. Mining 8*4 dump trucks have a longer wheelbase to ensure transport capacity. With the wheelbase being increased, this space can accommodate the target energy capacity. Urban 8*4 dump trucks with traditional fuel vehicle wheelbases of 2500 mm-2600 mm cannot accommodate the target energy capacity, and for rear-mounted swapping models, the wheelbase has been extended to 3200 mm-3300 mm, with battery swapping under frame based on this extended wheelbase for battery space allocation.

The space constraints at the front end of the battery include the leaf spring and its bracket, with the industry typically at 1600 mm-1800 mm (900 mm per side) under heavy load conditions. The space constraints at the rear end of the battery include the mudguard, approximately 700 mm from the wheel center. With a 50 mm safety clearance at both the front and rear ends of the battery, the envelope dimension for the swappable battery system for a 6*4 tractor is approximately 4200-900-700-100=2500 mm (triple-pack), and for an 8*4 dump truck, it is approximately 3300-900-700-100=1600 mm (dual-pack). Based on the envelope space of these two swappable battery systems, considering a 20 mm-30 mm gap between swappable battery systems, the length envelope dimension for each swappable battery system is approximately 700 mm-820 mm.

The width envelope dimension of the swappable battery system is designed to not exceed the legally required vehicle width, for example, 2550 mm for heavy-duty electric trucks.

The height envelope dimension of the swappable battery system is designed with a 20 mm gap between the upper end of the swappable battery system and the upper flange of the vehicle beam, and the bottom surface of the swappable battery system maintains a ground clearance of 300 mm or 400 mm or more. The upper flange of the vehicle beam typically has a ground clearance of 1000 mm-1100 mm, so the height envelope dimension for the swappable battery system is approximately 580 mm-780 mm.

Furthermore, to improve compatibility and interchangeability in battery swapping, this application further proposes some embodiments related to the battery installation frame 10.

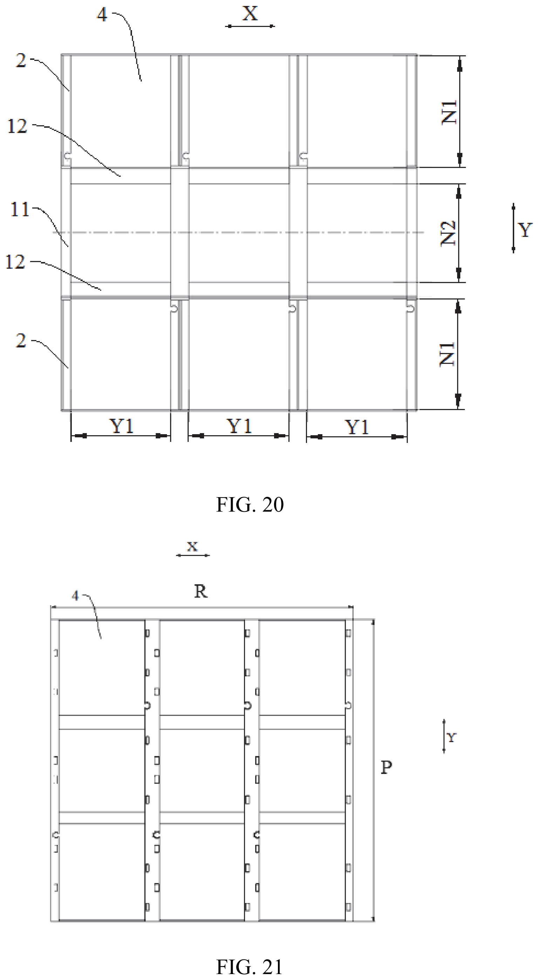

In some embodiments, referring to FIG. 20, in the length direction of the vehicle (for example, first direction X), the length of the battery mounting space 4 is Y1 and satisfies: 620 mm ≤ Y1 ≤ 720 mm.

In some embodiments, referring to FIG. 20, in the width direction of the vehicle (for example, second direction Y), the width of the battery mounting space 4 is N1 and satisfies: 690 mm ≤ N1 ≤ 815 mm.

In some embodiments, referring to FIG. 20, in the width direction of the vehicle (for example, second direction Y), the minimum width between the two second main walls 12 (or the width of the avoidance opening 15) is N2 and satisfies: 660 mm ≤ N2 ≤ 680 mm.

In some embodiments, referring to FIG. 21, in the width direction of the vehicle (for example, second direction Y), the total width of the battery installation frame 10 is P, and in the length direction of the vehicle (for example, first direction X), the total length of the battery installation frame 10 is R, and satisfies: 2300 mm ≤ P ≤ 2550 mm, 700 mm ≤ R ≤ 900 mm (for example, having only one battery mounting space 4), or 1500 mm ≤ R ≤ 1700 mm (for example, having two battery mounting spaces 4), or 2300 mm ≤ R ≤ 2500 mm (for example, having three battery mounting spaces 4), or 3100 mm ≤ R ≤ 3300 mm (for example, having four battery mounting spaces 4).

The above embodiments are only used to illustrate the technical solutions of this application and are not intended to limit them. Although this application has been described in detail with reference to the foregoing embodiments, those skilled in the art should understand that modifications can still be made to the technical solutions described in the foregoing embodiments, or equivalent replacements can be made to some or all of the technical features. Such modifications or replacements do not cause the essence of the corresponding technical solutions to depart from the scope of the technical solutions of the embodiments of this application, and they should be included within the scope of the claims and specification of this application. In particular, as long as there is no structural conflict, the technical features mentioned in the various embodiments can be combined in any manner. This application is not limited to the specific embodiments disclosed herein but includes all technical solutions falling within the scope of the claims.

## Claims

1. A battery installation frame for installing a battery to a vehicle beam, wherein the battery installation frame comprises:
a main body portion, wherein the main body portion is configured to be connected to the vehicle beam and extends along a length direction of the vehicle beam; and
an extension portion, wherein:
a length direction of the extension portion is at an angle to an extension direction of the main body portion;
the extension portion extends in a direction away from the main body portion; and
the extension portion is provided with a mounting structure configured to mount the battery.

2. The battery installation frame according to claim 1, wherein a plurality of extension portions are provided on at least one side of the main body portion in a width direction of main body portion, wherein the plurality of extension portions are spaced apart along the extension direction of the main body portion, and a battery mounting space is defined between two adjacent extension portions.

3. The battery installation frame according to claim 2, wherein the mounting structure is arranged on a side of the extension portion facing the battery mounting space.

4. The battery installation frame according to claim 3, wherein at least one intermediate extension portion among the plurality of extension portions is a shared extension portion, wherein the shared extension portion has a battery mounting space on each of two sides thereof in the extension direction of the main body portion, and mounting structures are respectively arranged on the two sides of the shared extension portion facing the battery mounting spaces on the two sides of the shared extension portion.

5. The battery installation frame according to claim 4, wherein the mounting structures on the two sides of the shared extension portion in the extension direction of the main body portion are offset in their orthographic projections on a projection plane perpendicular to the extension direction of the main body portion.

6. The battery installation frame according to any one of claims 3 to 5, wherein the battery mounting space is provided with the mounting structures on the extension portions located on both sides in the extension direction of the main body portion.

7. The battery installation frame according to claim 6, wherein the mounting structures on both sides of the battery mounting space in the extension direction of the main body portion are offset in their orthographic projections on a projection plane perpendicular to the extension direction of the main body portion.

8. The battery installation frame according to any one of claims 2 to 7, wherein a side of the extension portion facing the battery mounting space is provided with a plurality of mounting structures, at least two of which are spaced apart along the length direction of the extension portion.

9. The battery installation frame according to any one of claims 2 to 8, wherein the extension portion comprises a mounting edge protruding into the battery mounting space, and the mounting structure is located on the mounting edge.

10. The battery installation frame according to claim 9, wherein the mounting edge is located at a lower edge of the extension portion in a height direction of the extension portion.

11. The battery installation frame according to claim 9 or 10, wherein a length direction of the mounting edge is the same as an extension direction of the extension portion, and the mounting edge is provided with a plurality of mounting structures spaced apart along the length direction of the mounting edge.

12. The battery installation frame according to claim 9 or 10, wherein a length direction of the mounting edge is the same as an extension direction of the extension portion, and the mounting edge is provided with one mounting structure extending along the length direction of the mounting edge.

13. The battery installation frame according to any one of claims 1 to 12, wherein the extension portion is arranged on one side of the main body portion in a width direction of the main body portion.

14. The battery installation frame according to any one of claims 1 to 12, wherein the extension portion is arranged on each of two sides of the main body portion in a width direction of the main body portion.

15. The battery installation frame according to claim 14, wherein the extension portion comprises a first extension portion and a second extension portion respectively arranged on the two sides of the main body portion in a width direction of the main body portion, wherein the first extension portion and the second extension portion have the same extension direction, and projections of the first extension portion and the second extension portion along the extension direction of the first extension portion overlap.

16. The battery installation frame according to any one of claims 2 to 12, further comprising a reinforcing portion, the reinforcing portion being configured to connect at least two extension portions located on a same side of the main body portion in the width direction of the main body portion.

17. The battery installation frame according to any one of claims 1 to 16, wherein a height of the extension portion tends to decrease in a direction away from the main body portion.

18. The battery installation frame according to claim 17, wherein the mounting structure is located at a lower edge of the extension portion, wherein the lower edge of the extension portion extends along a horizontal line, and an upper edge of the extension portion tends to descend in a direction away from the main body portion.

19. The battery installation frame according to any one of claims 1 to 18, wherein the extension portion is provided with reinforcing ribs.

20. The battery installation frame according to claim 19, wherein:
at least some of the reinforcing ribs are arranged close to a middle of the extension portion in the length direction of the extension portion; or
at least some of the reinforcing ribs are arranged corresponding to the mounting structures in a height direction of the extension portion; or
when the extension portion is provided with a plurality of mounting structures, at least some of the reinforcing ribs are each arranged corresponding to a position between two adjacent mounting structures along the height direction of the extension portion.

21. The battery installation frame according to any one of claims 1 to 20, wherein the extension portion is provided with a first weight-reducing structure.

22. The battery installation frame according to any one of claims 1 to 21, wherein the main body portion comprises a beam avoidance groove, the beam avoidance groove having an opening running through along the extension direction of the main body portion.

23. The battery installation frame according to claim 22, wherein the main body portion comprises a first main wall and two second main walls, wherein the first main wall is arranged along a width direction of the main body portion, and the two second main walls are both arranged along the extension direction of the main body portion and are respectively connected to two ends of the first main wall in the width direction of the main body portion, to form the beam avoidance groove with an open top.

24. The battery installation frame according to claim 23, wherein the extension portion is connected to the second main wall.

25. The battery installation frame according to claim 23 or 24, wherein the first main wall and/or the second main wall is provided with a second weight-reducing structure.

26. The battery installation frame according to any one of claims 23 to 25, wherein the first main wall is provided with at least one mounting structure.

27. The battery installation frame according to any one of claims 23 to 26, wherein the first main wall and the two second main walls are integrally formed.

28. The battery installation frame according to any one of claims 1 to 27, wherein the main body portion and the extension portion are integrally formed.

29. A frame assembly, comprising a vehicle beam and the battery installation frame according to any one of claims 1 to 28, wherein the battery installation frame is configured to install a battery to the vehicle beam.

30. A frame assembly, comprising:
a vehicle beam; and
an extension portion, wherein:
at least a part of the extension portion is located on one side of the vehicle beam in a width direction of the vehicle beam;
the part of the extension portion located on one side of the vehicle beam in the width direction of the vehicle beam is at an angle to a length direction of the vehicle beam;
the extension portion extends in a direction away from the vehicle beam;
a mounting structure is disposed on the part of the extension portion located on one side of the vehicle beam in the width direction of the vehicle beam, wherein the mounting structure is configured to mount a battery.

31. The frame assembly according to claim 30, wherein a plurality of extension portions are provided on at least one side of the vehicle beam in the width direction of the vehicle beam, wherein the plurality of extension portions are spaced apart along the length direction of the vehicle beam, and a battery mounting space is defined between two adjacent extension portions.

32. The frame assembly according to claim 31, wherein the mounting structure is arranged on a side of the extension portion facing the battery mounting space.

33. The frame assembly according to claim 32, wherein at least one intermediate extension portion among the plurality of extension portions is a shared extension portion, wherein the shared extension portion has battery mounting spaces on two sides thereof in the length direction of the vehicle beam, and mounting structures are respectively arranged on the two sides of the shared extension portion facing the battery mounting spaces on the two sides of the shared extension portion.

34. The frame assembly according to claim 33, wherein the mounting structures on the two sides of the shared extension portion in the length direction of the vehicle beam are offset in their orthographic projections on a projection plane perpendicular to the length direction of the vehicle beam.

35. The frame assembly according to any one of claims 31 to 34, wherein the battery mounting space is provided with the mounting structures on the extension portions located on both sides in the length direction of the vehicle beam.

36. The frame assembly according to claim 35, wherein the mounting structures on both sides of the battery mounting space in the length direction of the vehicle beam are offset in their orthographic projections on a projection plane perpendicular to the length direction of the vehicle beam.

37. The frame assembly according to any one of claims 31 to 36, wherein a side of the extension portion facing the battery mounting space is provided with a plurality of mounting structures, at least two of which are spaced apart along the width direction of the vehicle beam.

38. The frame assembly according to any one of claims 31 to 37, wherein the extension portion comprises a mounting edge protruding into the battery mounting space, and the mounting structure is located on the mounting edge.

39. The frame assembly according to claim 38, wherein the mounting edge is located at a lower edge of the extension portion in a height direction of the vehicle beam.

40. The frame assembly according to claim 38 or 39, wherein a length direction of the mounting edge is the same as the width direction of the vehicle beam, and the mounting edge is provided with a plurality of mounting structures spaced apart along the length direction of the mounting edge.

41. The frame assembly according to claim 38 or 39, wherein a length direction of the mounting edge is the same as the width direction of the vehicle beam, and the mounting edge is provided with one mounting structure extending along the length direction of the mounting edge.

42. The frame assembly according to any one of claims 30 to 41, wherein the extension portion is arranged on one side of the vehicle beam in the width direction of the vehicle beam.

43. The frame assembly according to any one of claims 30 to 41, wherein the extension portion is arranged on each of two sides of the vehicle beam in the width direction of the vehicle beam.

44. The frame assembly according to claim 43, wherein the extension portion comprises a first extension portion and a second extension portion respectively arranged on the two sides of the vehicle beam in the width direction of the vehicle beam, wherein the first extension portion and the second extension portion have the same extension direction, and projections of the first extension portion and the second extension portion along the extension direction of the first extension portion overlap.

45. The frame assembly according to any one of claims 31 to 41, comprising a reinforcing portion, the reinforcing portion being configured to connect at least two extension portions located on a same side of the vehicle beam in the width direction of the vehicle beam.

46. The frame assembly according to any one of claims 30 to 45, wherein a height of the extension portion in a height direction of the vehicle beam tends to decrease in a direction away from the vehicle beam.

47. The frame assembly according to claim 46, wherein the mounting structure is located at a lower edge of the extension portion, wherein the lower edge of the extension portion extends along a horizontal line, and an upper edge of the extension portion tends to descend in a direction away from the vehicle beam.

48. The frame assembly according to any one of claims 30 to 47, wherein the extension portion is provided with reinforcing ribs.

49. The frame assembly according to claim 48, wherein:
at least some of the reinforcing ribs are arranged close to a middle of the extension portion in the width direction of the vehicle beam; or
at least some of the reinforcing ribs are arranged corresponding to the mounting structures in a height direction of the vehicle beam; or
when the extension portion is provided with a plurality of mounting structures, at least some of the reinforcing ribs are each arranged corresponding to a position between two adjacent mounting structures along the height direction of the vehicle beam.

50. The frame assembly according to any one of claims 30 to 49, wherein the extension portion is provided with a first weight-reducing structure.

51. The frame assembly according to any one of claims 30 to 50, wherein the extension portion is entirely located on one side of the vehicle beam in the width direction of the vehicle beam, and the frame assembly further comprises a main body portion, wherein the main body portion is connected to the vehicle beam, and the extension portion is connected to the main body portion.

52. The frame assembly according to claim 51, wherein the main body portion spans the vehicle beam, such that extension portions are respectively connected to two sides of the main body portion in the width direction of the vehicle beam.

53. A vehicle, comprising a battery and the frame assembly according to any one of claims 29 to 52, wherein the battery is installed to the frame assembly.

54. The vehicle according to claim 53, wherein the battery comprises a battery upper portion and a battery upper portion, wherein the battery upper portion is higher than a bottom surface of the vehicle beam, and the battery upper portion is lower than the bottom surface of the vehicle beam.

55. The vehicle according to claim 54, wherein in a length direction of the vehicle beam, a dimension of the battery upper portion is smaller than a dimension of the battery upper portion to form a stepped surface between the battery upper portion and the battery upper portion, the stepped surface abutting against a bottom of the extension portion.

56. The vehicle according to any one of claims 53 to 55, wherein the battery comprises two battery side portions and a battery central portion, wherein in a width direction of the vehicle beam, the two battery side portions are respectively located on two sides of the battery central portion, and a top surface of the battery central portion is lower than a top surface of the battery side portions, to form an avoidance groove, between the two battery side portions and the battery central portion, that extends along a length direction of the vehicle beam and has an open top.
